# EUROPEAN PATENT APPLICATION

(11) **EP 4 615 017 A1**
(43) Date of publication of application: **10.09.2025**
(21) Application number: 23896873.9
(22) Date of filing: 30.11.2023
(51) Int. Cl.: H04W 4/50

(54) **SERVICE CHAIN POLICY PROCESSING METHOD, APPARATUS AND SYSTEM**

(30) Priority: 01.12.2022 CN 202211543889
(71) Applicant: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN); LI, Yongcui, Shenzhen, Guangdong 518129 (CN)
(74) Representative: Pfenning, Meinig & Partner mbB
(86) International application number: PCT/CN2023/135444
(87) International publication number: WO 2024/114731

(57) **Abstract**

A service chain policy processing method, an apparatus, and a system are provided, and relate to the field of communication technologies. The method includes: A network function entity receives information about a service; and the network function entity determines, based on the information about the service, that a service related to a service chain policy library changes, and updates a service chain policy in the service chain policy library, where service chain policies in the service chain policy library correspond to different ordered combinations of a plurality of services. The foregoing method can implement dynamic configuration of the service chain policy library.

## Description

### CROSS-REFERENCE TO RELATED APPLICATIONS

This application claims priority to Chinese Patent Application No. 202211543889.9, filed with the China National Intellectual Property Administration on December 1, 2022 and entitled "SERVICE CHAIN POLICY PROCESSING METHOD, APPARATUS, AND SYSTEM", which is incorporated herein by reference in its entirety.

### TECHNICAL FIELD

This application relates to the field of communication technologies, and in particular, to a service chain policy processing method, an apparatus, and a system.

### BACKGROUND

With the development of a network functions virtualization (network functions virtualization, NFV) technology, a service function (service function, SF) does not need to be closely coupled with a hardware device, and may be flexibly deployed in a network in a form of software, to be decoupled from the hardware device. Common service functions include firewall, load balancing, transmission control protocol (transmission control protocol, TCP) optimization, video optimization, parental control, distributed denial of service (distributed denial of service, DDoS) attack defense, and the like.

A plurality of SFs may be deployed in a network. The SFs may be orderly combined to form a plurality of service function chains (service function chains, SFCs), or referred to as service chains. These service chains may be configured with corresponding service chain policies, and a plurality of service chain policies form a service chain policy library. For a specified service flow, the service flow may pass through service function nodes on the service chain in sequence according to a service chain policy that matches a service requirement. Based on the service chain, differentiated value-added services may be provided for a terminal device to meet a specific business or security requirement.

Currently, the service chain policy library is preconfigured or predefined, and this is applicable to a scenario in which the SF deployed in the network remains unchanged. Driven by the development of technologies such as NFV, the SF has a dynamic deployment requirement. Currently, a technology of preconfiguring or predefining the service chain policy library cannot adapt to a scenario of dynamic SF deployment.

### SUMMARY

Embodiments of this application provide a service chain policy processing method, an apparatus, and a system, to implement dynamic configuration of a service chain policy.

According to a first aspect, a service chain policy processing method is provided. The method includes: A network function entity receives information about a service; and the network function entity determines, based on the information about the service, that a service related to a service chain policy library changes (for example, a service is added, a service is deleted, or a service is updated), and updates a service chain policy in the service chain policy library, where service chain policies in the service chain policy library correspond to different ordered combinations of a plurality of services.

The foregoing method may be applied to a mobile edge computing system, a service chain system, or another system having a service chain policy update requirement. The mobile edge computing system is used as an example, in a possible implementation, the network function entity may be a network function entity for receiving service registration, for example, an edge enabler server (edge enabler server, EES). More specifically, the network function entity may be an EES in a single-EES architecture, or a primary EES in a multi-EES architecture. In another possible implementation, the network function entity may be a network function entity for data network configuration, for example, an edge configuration server (edge configuration server, ECS).

In the foregoing implementation, when the service related to the service chain policy library changes (for example, a service is added, deleted, or updated), the network function entity may update the service chain policy in the service chain policy library, to implement dynamic update or dynamic configuration of the service chain policy library, so as to adapt to a scenario in which a service is dynamically deployed. Further, in comparison with a problem that the service chain policy library is not updated in a timely manner because the service chain policy library is configured statically (for example, the service chain policy library is configured manually), in the foregoing implementation of this embodiment of this application, the service chain policy library may be updated in a timely manner based on a service change.

In a possible implementation, that the network function entity determines, based on the information about the service, that a service related to a service chain policy library changes includes: The network function entity determines, based on the information about the service, a newly added service related to the service chain policy library, where the information about the service includes information about the newly added service. Optionally, that a network function entity receives information about a service includes: The network function entity receives a registration request message, where the registration request message includes the information about the newly added service.

In a possible implementation, after the service chain policy in the service chain policy library is updated, the service chain policy library includes updated service chain policies, the updated service chain policies correspond to different ordered combinations of a plurality of services, and the plurality of services include the newly added service.

In a possible implementation, that the network function entity determines, based on the information about the service, that a service related to a service chain policy library changes includes: The network function entity determines, based on the information about the service, a to-be-deleted service in services related to the service chain policy library, where the information about the service includes information about the to-be-deleted service. Optionally, that a network function entity receives information about a service includes: The network function entity receives a deregistration message, where the deregistration message includes the information about the to-be-deleted service.

In a possible implementation, after the service chain policy in the service chain policy library is updated, the service chain policy library includes updated service chain policies, the updated service chain policies correspond to different ordered combinations of a plurality of services, and the plurality of services do not include the to-be-deleted service.

In a possible implementation, that the network function entity determines, based on the information about the service, that a service related to a service chain policy library changes includes: The network function entity determines, based on the information about the service, a to-be updated service in services related to the service chain policy library, where the information about the service includes information about the to-be updated service. Optionally, that a network function entity receives information about a service includes: The network function entity receives a registration update request message, where the registration update request message includes the information about the to-be updated service.

In a possible implementation, after the service chain policy in the service chain policy library is updated, the service chain policy library includes updated service chain policies, the updated service chain policies correspond to different ordered combinations of a plurality of services, and the plurality of services include the to-be updated service.

In a possible implementation, the network function entity is a network function entity (for example, the EES in the mobile edge computing system) for receiving service registration, and that a network function entity receives information about a service includes: The network function entity receives the information about the service from an edge application server or a service function entity.

Optionally, the method further includes: The network function entity receives indication information, where the indication information indicates whether the edge application server or the service function entity has a service providing capability; and that the service chain policy in the service chain policy library is updated includes: determining, based on the indication information, that the edge application server or the service function entity has the service providing capability, and the network function entity updates the service chain policy in the service chain policy library.

In the foregoing implementation, the service chain policy library can be dynamically updated only when the edge application server or the service function entity has the service providing capability.

In a possible implementation, the network function entity is a network function entity (for example, the ECS in the mobile edge computing system) for data network configuration, and that a network function entity receives information about a service includes: The network function entity receives the information about the service from a network function entity for receiving service registration. Optionally, the information about the service from the network function entity for receiving service registration is sent, based on information about a service from an edge application server or a service function entity, by the network function entity for receiving service registration.

In a possible implementation, the network function entity is a network function entity for receiving service registration, and that a network function entity receives information about a service includes: The network function entity receives the information about the service from another network function entity for receiving service registration. Optionally, the network function entity is a primary device in a plurality of network function entities for receiving service registration.

For example, based on the foregoing implementation, the mobile edge computing system is used as an example. The mobile edge computing system includes a first EES and a second EES, and the first EES is a primary EES (that is, the primary device). The second EES may send the information about the service to the first EES. When determining that the service changes, the first EES may update the service chain policy in the service chain policy library based on a changed service.

In a possible implementation, after the network function entity updates the service chain policy in the service chain policy library, the method further includes: The network function entity sends the service chain policy library to a third network function entity (for example, a policy control function (policy control function, PCF)), or sends the service chain policy library to the third network function entity (for example, the PCF) via at least one related network function entity. The third network function entity (for example, the PCF) is configured to perform service chain policy control based on the service chain policy library. Optionally, the related network function entity may include a network exposure function entity, a unified data management entity, and a unified data repository entity; or the related network function entity may include a unified data management entity and a unified data storage entity; or the related network function entity is an operation, administration, and maintenance entity. Based on the foregoing implementation, the network function entity may configure the updated service chain policy library in the third network function entity (for example, the PCF).

In a possible implementation, after the network function entity updates the service chain policy in the service chain policy library, the method further includes: The network function entity receives a request message from an edge application server or a service function entity, where the request message includes information related to a service requirement; the network function entity selects a target service chain policy from the service policy library based on the information related to the service requirement; and the network function entity sends information about the target service chain policy to the edge application server or the service function entity. Further, the edge application server or the application function entity sends the information about the target service chain policy to the third network function entity (for example, the PCF), or sends an identifier of the target service chain policy to the third network function entity (for example, the PCF) via the related network function entity (for example, the network exposure function (network exposure function, NEF)). The third network function entity (for example, the PCF) may obtain the target service chain policy from the service chain policy library based on the information about the target service chain policy, and perform policy control based on the target service chain policy. For example, the third network function entity may generate and send a policy and charging control (policy and charging control, PCC) rule based on the target service chain policy, and send the PCC rule to a network function entity (for example, a session management function (session management function, SMF)) for session management.

In the foregoing implementation, for a service chain policy request, the network function entity may first determine the target service chain policy based on the information related to the service requirement, and send the information about the target service chain policy to the edge application server or the service function entity, and then the edge application server or the service function entity sends the information to the third network function entity (for example, the PCF). In this way, the third network function entity (for example, the PCF) does not need to perform an operation of mapping the service requirement to the service chain policy, to reduce overheads that the third network function entity (for example, the PCF) performs service chain policy conversion based on the service requirement.

In a possible implementation, the information about the service includes any one or more of the following: an identifier of the service, indication information of a service provider, indication information of a data network to which the service belongs, and endpoint information of the service.

According to a second aspect, a service chain policy processing method is provided. The method includes: A second network function entity sends information about a service to a network function entity; the network function entity receives the information about the service; and the network function entity determines, based on the information about the service, that a service related to a service chain policy library changes, and updates a service chain policy in the service chain policy library, where service chain policies in the service chain policy library correspond to different ordered combinations of a plurality of services.

According to a third aspect, an apparatus is provided. The apparatus includes a processing unit and a transceiver unit. The transceiver unit is configured to receive information about a service. The processing unit is configured to: determine, based on the information about the service, that the service changes, update a service chain policy in a service chain policy library, where service chain policies in the service chain policy library correspond to different ordered sets of a plurality of services.

According to a fourth aspect, an apparatus is provided. The apparatus includes one or more processors, configured to execute computer program instructions, and when the computer program instructions are executed by the one or more processors, the device is enabled to perform the method in any one of the first aspect.

According to a fifth aspect, a communication system is provided. The communication system may include a network function entity and a second network function entity. The second network function entity is configured to send information about a service to the network function entity. The network function entity is configured to perform the method in any one of the first aspect.

According to a sixth aspect, a computer-readable storage medium is provided. The computer-readable storage medium includes a computer program, and when the computer program is run on a computing device, the computing device is enabled to perform the method in any one of the first aspect.

According to a seventh aspect, a chip is provided. The chip is coupled to a memory, and is configured to read and execute program instructions stored in the memory, to implement the method in any one of the first aspect.

According to an eighth aspect, a computer program product is provided. When the computer program product is invoked by a computer, the computer is enabled to perform the method in any one of the first aspect.

According to the implementations provided in the second aspect to the eighth aspect, the dynamic configuration of the service chain policy can be implemented, to adapt to a scenario in which a service is dynamically deployed. It may be understood that, in comparison with a problem that the service chain policy library is not updated in a timely manner because the service chain policy library is configured statically (for example, the service chain policy library is configured manually), in the foregoing implementation of this application, the service chain policy library may be updated in a timely manner based on a service change. For specific technical effects, refer to beneficial effects of the first aspect. Details are not described again.

### BRIEF DESCRIPTION OF DRAWINGS

FIG. 1 is a diagram of a 5G non-roaming architecture based on a service-oriented interface according to an embodiment of this application;
FIG. 2 is a diagram of a 5G non-roaming architecture based on a reference point according to an embodiment of this application;
FIG. 3 is a diagram of a service chain deployment scenario in a 5G network according to an embodiment of this application;
FIG. 4 is a diagram of an SA6 edge computing application architecture and a functional model according to an embodiment of this application;
FIG. 5 is a schematic flowchart of 5G service chain control in a related technology;
FIG. 6a is a diagram in which an EES is responsible for maintaining a service chain policy library according to an embodiment of this application;
FIG. 6b is a diagram in which an ECS is responsible for maintaining a service chain policy library according to an embodiment of this application;
FIG. 6c is a diagram in which a primary EES is responsible for maintaining a service chain policy library according to an embodiment of this application;
FIG. 7 is a diagram of updating a service chain policy library to a PCF via a UDR according to an embodiment of this application;
FIG. 8 is a diagram of updating a service chain policy library to a PCF via an OAM according to an embodiment of this application;
FIG. 9a is a diagram in which a PCF is responsible for converting a service requirement into information about a target service chain policy according to an embodiment of this application;
FIG. 9b is a diagram in which a first network function entity (for example, an EES or an ECS) is responsible for converting a service requirement into information about a target service chain policy according to an embodiment of this application;
FIG. 10 is a schematic flowchart of dynamically updating a service chain policy library according to an embodiment of this application;
FIG. 11 is a schematic flowchart of requesting a service policy according to an embodiment of this application;
FIG. 12A and FIG. 12B are a schematic flowchart in which when a service is deployed on a single EES and the EES is responsible for maintaining a service chain policy library, the EES sends an updated service chain policy library to a PCF based on a UDR manner as an update according to an embodiment of this application;
FIG. 13A and FIG. 13B are a schematic flowchart in which when a service is deployed on a single EES and the EES is responsible for maintaining a service policy library, the EES sends an updated service chain policy library to a PCF in an OAM manner as an update according to an embodiment of this application;
FIG. 14A to FIG. 14C are a schematic flowchart in which when services are deployed on a plurality of EESs and an ECS is responsible for maintaining a service policy library, the ECS sends an updated service chain policy library to a PCF in a UDR manner as an update according to an embodiment of this application;
FIG. 15A to FIG. 15C are a schematic flowchart in which when services are deployed on a plurality of EESs and an ECS is responsible for maintaining a service chain policy library, the ECS sends an updated service chain policy library to a PCF in an OAM manner as an update according to an embodiment of this application;
FIG. 16A and FIG. 16B are a schematic flowchart in which when services are deployed on a plurality of EESs and a primary EES is responsible for maintaining a service policy library, the primary EES sends an updated service chain policy library to a PCF in a UDR manner as an update according to an embodiment of this application;
FIG. 17A and FIG. 17B are a schematic flowchart in which when services are deployed on a plurality of EESs and a primary EES is responsible for maintaining a service chain policy library, the primary EES sends an updated service chain policy library to a PCF in an OAM manner as an update according to an embodiment of this application;
FIG. 18 is a diagram of a structure of an apparatus according to an embodiment of this application; and
FIG. 19 is a diagram of a structure of another apparatus according to an embodiment of this application.

### DESCRIPTION OF EMBODIMENTS

The following clearly describes the technical solutions in embodiments of this application with reference to the accompanying drawings in embodiments of this application. Terms used in the following embodiments are merely intended to describe specific embodiments, but are not intended to limit this application. The terms "one", "a", "the", "the foregoing", and "this" of singular forms used in this specification and the appended claims of this application are also intended to include expressions such as "one or more", unless otherwise specified in the context clearly. It should be further understood that, in embodiments of this application, "one or more" refers to one, two, or more, and "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

"A plurality of" in embodiments of this application indicates two or more. It should be noted that in the descriptions of embodiments of this application, the terms such as "first" and "second" are merely intended for distinction in description, but should not be construed as indicating or implying relative importance or indicating or implying a sequence.

The following describes technologies related to embodiments of this application.

### (1) 5th generation mobile communication technology (5th Generation Mobile Communication Technology, 5G) network architecture

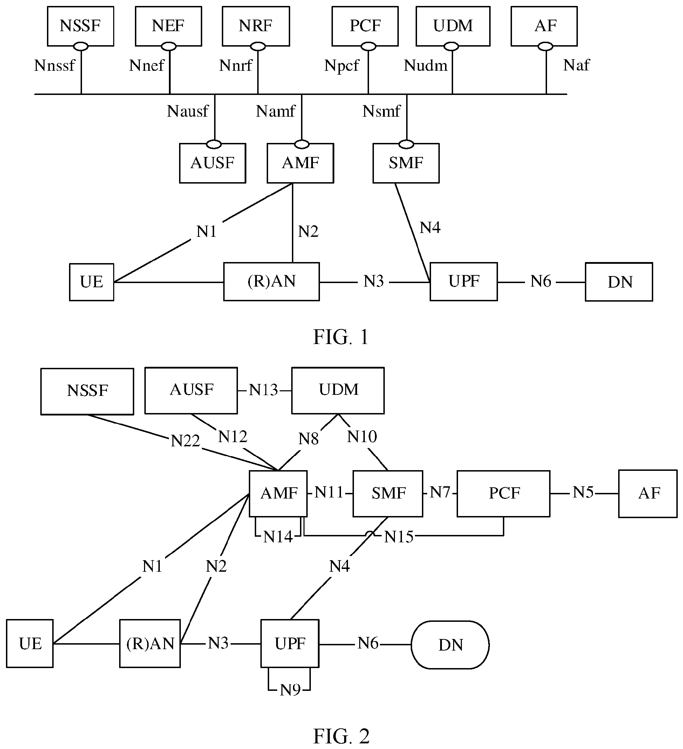

A non-roaming architecture of the 5G network has two description manners. One is an architecture based on a service-oriented interface, as shown in FIG. 1, and the other is an architecture based on a reference point (point-to-point), as shown in FIG. 2.

The 5G network architecture consists of an access network and a core network. The access network is configured to implement a function related to radio access, and the core network is configured to implement a function of providing a data connection for a terminal device. Key devices of the core network include an access and mobility management function (access and mobility management function, AMF), an SMF, a user plane function (user plane function, UPF), a PCF, a unified data management (unified data management, UDM), a unified data repository (unified data repository, UDR), and the like.

Based on the foregoing 5G network architecture, functions of devices related to embodiments of this application are as follows:

Terminal device may be user equipment (user equipment, UE), a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.

The (R)AN device is a device that provides access for the terminal device, including a radio access network (radio access network, RAN) device and an access network (access network, AN) device. The RAN device is mainly a radio network device in a 3rd generation partnership project (3rd Generation Partnership Project, 3GPP) network, and the AN may be an access network device defined by a non-3GPP (non-3GPP). The RAN device is mainly responsible for functions on an air interface side, such as radio resource management, quality of service (quality of service, QoS) management, and data compression and encryption. The RAN device may include base stations in various forms, for example, a macro base station, a micro base station (which is also referred to as a small cell), a relay station, and an access point. In systems that use different radio access technologies, names of a device that has a base station function may be different. For example, in a 5G system, the device is referred to as a RAN or a gNB (5G NodeB); in a long term evolution (long term evolution, LTE) system, the device is referred to as an evolved NodeB (evolved NodeB, eNB or eNodeB); and in a 3rd generation (3rd generation, 3G) system, the device is referred to as a NodeB (NodeB). The AN device allows interconnection and interworking between a terminal device and a 3GPP core network by using a non-3GPP technology. For example, the non-3GPP technology includes a wireless fidelity (wireless fidelity, Wi-Fi) network, a worldwide interoperability for microwave access (worldwide interoperability for microwave access, WiMAX) network, or a code division multiple access (code division multiple access, CDMA) network.

The AMF is mainly responsible for mobility management in a mobile network, such as user location update, registration of a user with a network, and user switching.

The SMF is mainly responsible for session management in the mobile network, such as session establishment, modification, and release. Specific functions include, for example, allocating an IP address to a user and selecting a UPF that provides a packet forwarding function.

The UPF is responsible for forwarding and receiving user data in a terminal device. The UPF may receive user data from a data network, and transmit the user data to the terminal device via the access network device (corresponding to downlink transmission). The UPF may further receive user data from the terminal device via the access network device, and forward the user data to the data network (corresponding to uplink transmission). A transmission resource and scheduling function that is used by the UPF to provide a service for the terminal device is managed and controlled by the SMF.

The PCF is mainly for providing a unified policy framework to control a network behavior, and providing a policy rule for a control layer network function, and is also responsible for obtaining policy decision-related subscription information of the user.

An NEF is mainly for supporting capability and event exposure.

An application function (application function, AF) mainly supports interacting with the 3GPP core network to provide a service, for example, affect a data routing decision and a policy control function, or provide some third-party services for a network side.

The UDM is configured to generate an authentication credential, process a user identity (for example, store and manage a permanent identity of the user), perform access authorization control, manage subscription data, and the like.

The UDR provides a storage function for capability exposure data from the NEF, policy data from the PCF, and subscription data from the UDM.

A data network (data network, DN) is a service network that provides a data transmission service for the user, for example, an IP multi-media service (IP multi-media service, IMS) or an internet (Internet). A packet data unit (packet data unit, PDU) session between the terminal device and the DN is established to access the DN.

In embodiments of this application, the UDR may be responsible for collecting information about a service chain policy library, and sending the information to the PCF as an update.

In the foregoing architecture, each device in the core network may also be referred to as a network element, a network function, a network function entity, a function, an entity, a function entity, or the like, and may be a network element implemented on dedicated hardware, or may be a software instance running on dedicated hardware, or may be an instance of a virtualized function on a proper platform. For example, the virtualization platform may be a cloud platform.

A distribution form of the devices is not limited in embodiments of this application. The distribution form shown in FIG. 1 is merely an example, and is not limited in embodiments of this application.

It may be understood that the communication system architecture shown in FIG. 1 and FIG. 2 is not limited to including only the devices shown in the figures, and may further include another device not shown in the figures. Details are not described herein in embodiments of this application one by one. The communication systems shown in FIG. 1 and FIG. 2 do not constitute any limitation on a communication system to which embodiments of this application is applicable. Optionally, the method in embodiments of this application is further applicable to various future communication systems, for example, a 6G system or another communication network.

For ease of description, in this specification, the following uses an example of the devices in the architecture shown in FIG. 1 for description, and an XX device or network function entity is directly referred to as XX for short. For example, the PCF network function entity is referred to as PCF for short. It should be understood that names of all devices or network function entities in embodiments of this application are merely used as examples, and may also be referred to as other names in future communication. Alternatively, in future communication, a device or a network function entity in this application may be replaced with another entity or device having a same function. This is not limited in embodiments of this application. Unified descriptions are provided herein, and details are not described below again.

### (2) Service chain

With development of an NFV technology, an SF does not need to be closely coupled with a hardware device, and may be flexibly deployed in a network in a form of software, to be decoupled from the hardware device. Common SFs include firewall, load balancing, TCP optimization, video optimization, parental control, DDoS attack defense, and the like.

A plurality of SFs may be deployed on an N6 interface other than a UPF in a 5G network or an SGI interface other than a packet data network gateway (PDN gateway, PGW, where PDN is an English abbreviation for packet data network, that is, packet data network) in a 4G network. A specified service flow may pass through different SF nodes in sequence, that is, form a service chain (or referred to as a service function chain or an SFC), to provide differentiated value-added services for a terminal device and meet a specific business or security requirement.

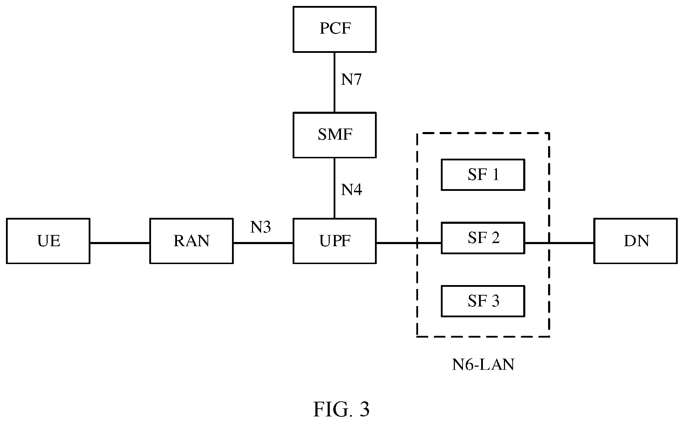

FIG. 3 provides an example of a service chain deployment scenario in the 5G network. As shown in FIG. 3, an SMF indicates a service chain policy to a UPF, so that the UPF can determine, for a specified service flow based on the service chain policy, SF nodes through which the service flow passes and a sequence of the SF nodes. For example, if SFs deployed in the network include an SF 1, an SF 2, and an SF 3, there are 15 service chains below: <SF 1>, <SF 2>, <SF 3>, <SF 1 and SF 2>, <SF 1 and SF 3>, <SF 2 and SF 1>, <SF 2 and SF 3>, <SF 3 and SF 2>, <SF 3 and SF 1>, <SF 1, SF 2, and SF 3>, <SF 1, SF 3, and SF 2>, <SF 2, SF 1, and SF 3>, <SF 2, SF 3, and SF 1>, <SF 3, SF 1, and SF 2>, and <SF 3, SF 2, and SF 1>. <SF 1 and SF 2> indicates that the service flow needs to pass through the SF 1 and the SF 2, and the service flow is first processed by the SF 1 and then processed by the SF 2.

### (3) Mobile edge computing

In 4G and earlier conventional mobile network architectures and deployments, a user plane device is usually deployed in a tree topology. An uplink user packet passes through a base station and a backhaul network, and finally accesses a data network through anchor gateways that are deployed in a centralized manner. These anchor gateways are usually deployed at a high position on the network, for example, a central machine room in a large area. This topology structure is simple, so that an operator can perform centralized service management and control and packet processing at an anchor.

With explosive growth of mobile service traffic, this deployment manner becomes increasingly difficult to support a fast-growing mobile service traffic model. In a network in which anchor gateways are deployed in a centralized manner, increased traffic is finally concentrated in a gateway and a core machine room, and this imposes an increasingly high requirement on backhaul network bandwidth, a machine room throughput, and a gateway specification. In addition, a long-distance backhaul network from an access point to the anchor gateway and a complex transmission environment cause a high delay and jitter of user packet transmission.

Mobile edge computing (mobile-edge computing, MEC) is also referred to as multi-access edge computing (multi-access edge computing), and may nearby provide, by using a radio access network, a telecommunication user with a service needed by an information technology (information technology, IT) and a cloud computing function, to create a telecommunication-level service environment with high performance, a low delay, and high bandwidth, accelerate fast downloading of content, services, and applications in the network, and enable a consumer to have uninterrupted high-quality network experience.

### (4) MEC architecture

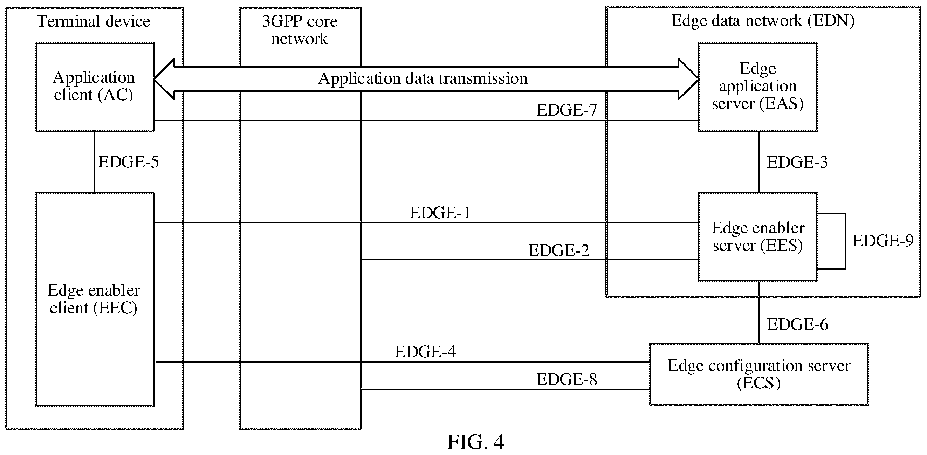

3GPP SA6 is researching on application-enabled mobile edge computing (MEC), and defines an architecture model shown in FIG. 4. Main functions of network function entities in the architecture are described as follows.

An edge data network (edge data network, EDN) is a general understanding that the EDN corresponds to only one data network and is a special local data network (local DN). The edge data network may be identified by using a data network access identifier (data network access identifier, DNAI) and a data network name (data network name, DNN), and is a network logical concept. Another understanding of the EDN is that the EDN is a peer concept of central cloud, may be understood as a local data center (a geographical location concept), may be identified by using the DNAI, and may include a plurality of local data networks.

Edge application server (edge application server, EAS): An application deployed in an edge data network is referred to as an application instance. Specifically, a server application program is deployed and run on an instance (instance) of the EDN. For example, some examples of the server application program include social media software, an augmented reality (augmented reality, AR) application, and a virtual reality (virtual reality, VR) application. One or more EASs may be deployed for one application in one or more EDNs. EASs deployed and running in different EDNs may be considered as different EASs of one application. The EASs may share one domain name, and may use one IP address or different IP addresses. The EAS may also be referred to as an edge application (server), an application instance, an edge application instance, an MEC application (server), an EAS function, or the like.

An application client (application client, AC) is a peer entity of an edge application on a terminal device side. The application client is used by an application user (user) to obtain an application service from the application server. The application client is a client program of an application on the terminal device side. The application client may be connected to an application server on a cloud to obtain the application service, or may be connected to an EAS deployed and running in one or more EDNs to obtain the application service.

An edge enabler server (edge enabler server, EES) may provide some enabling capacities for the application instance deployed in the EDN, to better support application deployment in the MEC. The edge enabler server may support registration of the edge application, support authentication and authorization of a terminal device, and provide IP address information of the application instance for the terminal device. The edge enabler server may further obtain an identifier and an IP address of the application instance, and further send the identifier and the IP address of the application instance to an edge configuration server. The EES is deployed in the EDN. Usually, an EAS is registered with an EES, or information about an EAS is configured on an EES by using a management system. The EES is referred to as an EES associated with the EAS. The EES may control, manage, and register the EAS configured on the EES.

An edge enabler client (edge enabler client, EEC) is a peer entity of the EES on the terminal device side. The EEC is configured to register information about the EEC and information about the application client with the EES, perform security authentication and authorization, obtain an IP address of the EAS from the EES, and provide an edge computing enabling capacity for the application client. For example, the EEC uses an EAS discovery service to return the IP address of the EAS to the application client.

An edge configuration server (edge configuration server, ECS) is responsible for EDN configuration, for example, providing EES information for the terminal device. The edge configuration server may further directly provide information about an application instance to the terminal device, and interact with a domain name system (domain name system, DNS) of the application to obtain the information about the application instance. Further, the edge configuration server may obtain the information about the application instance and the information about the IP address from another function entity and store the information.

An application user signs a service agreement with an application provider, to provide a service for the application user. The application user logs in to an application client (AC) on the terminal device, and performs communication over a connection between the application client (AC) and the edge application (EAS). The edge enabler client (EEC) is a middleware layer, and is usually located in an operating system, or located between the application client and the operating system. The application client (AC) may obtain an edge enabler service from the edge enabler client (EEC) through an application programming interface (application programming interface, API).

EDGE-X shown in FIG. 4 represents an interface between function entities. For example, EDGE-1 is an interface between the edge enabler server (EES) and the edge enabler client (EEC).

With development of NFV and MEC technologies, the SF can be dynamically deployed or instantiated. For example, in the SA6 MEC architecture shown in FIG. 4, the EAS may provide an SF or serve as an SF node, and the SF may be dynamically deployed, to provide differentiated value-added services for the terminal device or the user. In this context, a problem worthy of attention is that an SF deployed in a network is no longer statically deployed, but may be dynamically deployed based on a service requirement. For example, for a network formed by an SF 1 and an SF 2, a new SF 3 may be dynamically added, and an updated service function includes the SF 1, the SF 2, and the SF 3.

Dynamic SF deployment or a dynamic SF change may include one or more of the following cases: adding an SF, deleting an SF, and updating an SF. Updating the SF may be understood as replacing an original SF with a new SF. For example, an original SF 1 is replaced with a newly added SF 2. The SF 2 may be an enhanced version or a later version of a function of the SF 1, or may be an SF having a function different from that of the original SF 1. This is not limited in this embodiment of this application. It may be understood that updating the SF includes an operation of deleting an original SF and adding a new SF.

For another system that has a service chain processing function, for example, a system that has a service chain maintenance function and/or a service chain configuration function, there is also a scenario in which an SF is dynamically deployed. In embodiments of this application, systems that have a service chain function are collectively referred to as a service chain system, and a specific example of the service chain system is a mobile edge computing (MEC) system.

In the 4G network, the service chain control technology is also referred to as a traffic steering control (traffic steering control) technology. A service chain policy library supported by a policy and charging rules function (policy and charging rules function, PCRF) is preconfigured or statically configured. A service chain policy library includes a plurality of service chain policies. Each service chain policy corresponds to one service chain and includes a service chain policy ID and an ordered set of corresponding SFs. For example, if an SF set includes an SF 1 and an SF 2, information in the service chain policy library configured on the PCRF may be shown in Table 1.

**Table 1: Example of information about a service chain policy library statically configured on a PCRF**

| Service chain policy ID | Service chain |
|---|---|
| 1 | SF 1 |
| 2 | SF 2 |
| 3 | SF 1 → SF 2 |
| 4 | SF 2 → SF 1 |

In the 4G network, the service chain policy library is further preconfigured on a service chain execution device, and the service chain execution device may include a policy and charging enforcement function (policy and charging enforcement function, PCEF), a traffic detection function (traffic detection function, TDF), and a traffic steering support function (traffic steering support function, TSSF).

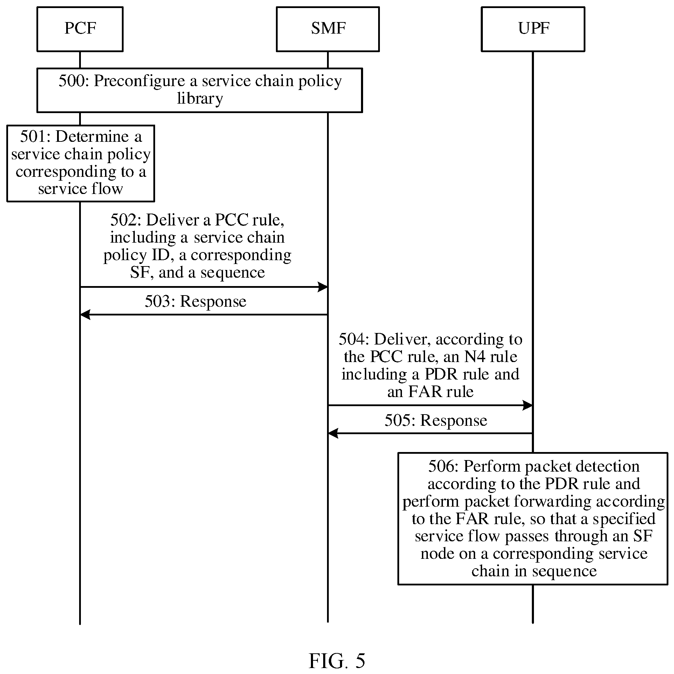

Research on service chain control in the 5G network inherits an idea of a technology related to a service chain in the 4G network. FIG. 5 shows an example of a 5G service chain control procedure. As shown in the figure, a service chain policy library is preconfigured on a PCF and an SMF (step 500). In a session establishment process, the PCF determines a service chain policy based on a service requirement (step 501), and delivers a PCC rule to the SMF (step 502), to activate the service chain policy on the SMF. Further, the SMF returns a response to the PCF (step 503). The SMF generates an N4 rule according to the PCC rule, where the N4 rule includes a packet detection rule (packet detection rule, PDR) and a forwarding action rule (forwarding action rule, FAR), and sends the N4 rule to a UPF (step 504). Further, the UPF returns a response to the SMF (step 505). The UPF performs packet detection according to the PDR rule in the received N4 rule and performs packet forwarding according to the FAR rule, so that a specified service flow passes through an SF node on a corresponding service chain on an N6 interface in sequence (step 506).

In a current service chain control technology, a service chain policy library on a PCF of a 4G network and a 5G network is preconfigured or predefined, and only static SF deployment is supported. In other words, an SF in a network remains unchanged, or when an SF changes, information about the service chain policy library needs to be manually updated and configured by using a network management system. Driven by development of NFV and MEC technologies, the SF has a dynamic deployment requirement, and the technology of preconfiguring the service chain policy library has a problem of untimely updating.

Based on this, embodiments of this application provide a service chain policy processing method, an apparatus, and a system, to dynamically update a service chain policy library based on a dynamic deployment status of a service. In some other embodiments, a method for using an updated service chain policy library is further provided.

The method, the apparatus, and the system in this application are based on a same technical concept. Because problem-resolving principles of the method, the apparatus, and the system are similar, mutual reference may be made among implementations of the method, the apparatus, and the system. Repeated parts are not described again.

The following describes in detail embodiments of this application with reference to the accompanying drawings.

The following first describes some terms in embodiments of this application.

A service is also referred to as a service function, and a meaning of the service is basically the same as that of the SF in the related technology. For example, common services include firewall, load balancing, TCP optimization, video optimization, parental control, DDoS attack defense, and the like.

A service chain is also referred to as a service function chain, and a meaning of the service chain is basically the same as that of the SFC in the related technology. A plurality of service chains may be formed by orderly combining various services.

Service chain policy and service chain policy library: Various service chains may be configured as a service chain policy library. The service chain policy library includes a plurality of service chain policies. Different service chain policies may be identified by using service chain policy identifiers. One service chain policy corresponds to one service chain. The service chain policy is also referred to as a service function chain policy, and the service chain policy library is also referred to as a service function chain policy library.

When a service dynamically changes, in some embodiments of this application, when a service dynamically changes (for example, a service is added, a service is deleted, or a service is updated), a network function entity responsible for maintaining the service chain policy library updates the service chain policy library based on a changed service, to dynamically update the service chain policy library.

For ease of description, in this embodiment of this application, the network function entity responsible for maintaining the service chain policy library is referred to as a network function entity for short. To distinguish from another network function entity, the network function entity responsible for maintaining the service chain policy library is referred to as a "first network function entity" in this specification. Optionally, the first network function entity may be an existing device in a current network system architecture, and a function of the existing device may be enhanced, so that the existing device has a function of maintaining the service chain policy library. Certainly, the first network function entity may alternatively be a newly added device. This is not limited in embodiments of this application.

Optionally, the first network function entity is implemented by an application function component. The application function component may implement a function of dynamically maintaining the service chain policy library. Therefore, the first network function entity may also be referred to as the "application function component".

Optionally, the first network function entity may further have an application enabling function, for example, have a function of receiving dynamic service change information. More specifically, the first network function entity may be a function entity that receives service registration. The service registration may be service registration/deregistration/registration update or the like. Therefore, the first network function entity may also be referred to as a "function entity for application enabling", an "application enabling layer entity", an "application enabling device", or an "application enabling layer device".

Further, the first network function entity may have a function of providing an enabling capacity for an application instance deployed in an edge data network (EDN). Therefore, the first network function entity may also be referred to as an "edge enabling layer entity", an "edge enabling device", or an "edge enabling layer device".

Further, the first network function entity may be a network function entity in a mobile edge computing system. In a possible implementation, the first network function entity may be a function entity that is for receiving service registration and that is in the mobile edge computing system, and may provide functions such as service online, deployment, or registration. For example, the first network function entity may be the EES in the SA6 MEC architecture shown in FIG. 4. Further, when there are a plurality of function entities for receiving registration in the system, the first network function entity may be a primary device in these function entities. For example, if there are a plurality of EESs in the SA6 MEC architecture shown in FIG. 4, the first network function entity may be a primary EES in the plurality of EESs. In another possible implementation, the first network function entity may be a function entity for edge data network configuration in a mobile edge computing system, and may provide a registration function for the function entity for receiving service registration. The registration may be registration/deregistration/registration update, and the like. The first network function entity has information about the function entity for receiving service registration and information about a service on the function entity for receiving service registration, for example, may be an ECS in the SA6 MEC architecture shown in FIG. 4.

A naming manner of the first network function entity is not limited in embodiments of this application.

The SA6 MEC architecture shown in FIG. 4 is used as an example. The EAS may be used as a service node to provide a function corresponding to a corresponding service. For example, the EAS is used as a load balancing server to provide a corresponding load balancing service function. Based on this architecture, in some embodiments of this application, the EES, the ECS, or the primary EES may be used as the first network function entity, and is responsible for generating, updating, and storing the service chain policy library.

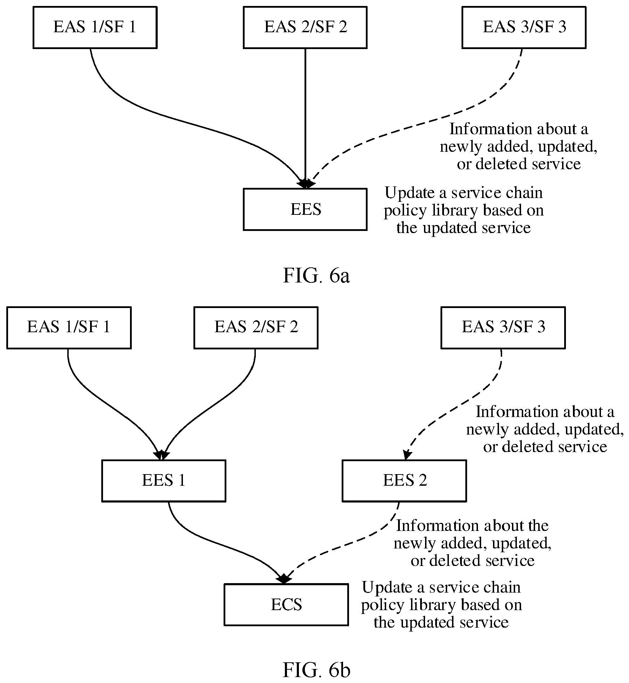

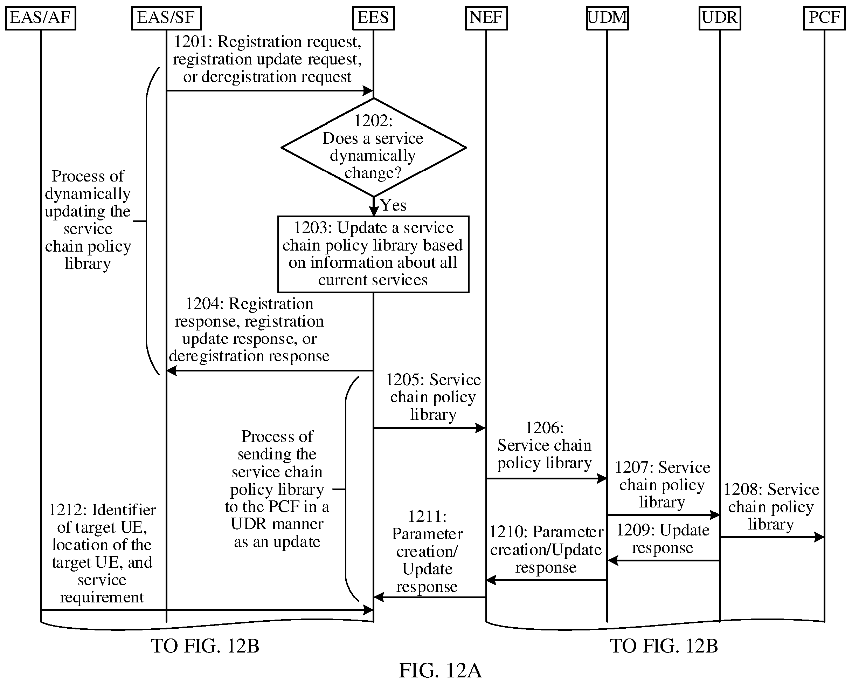

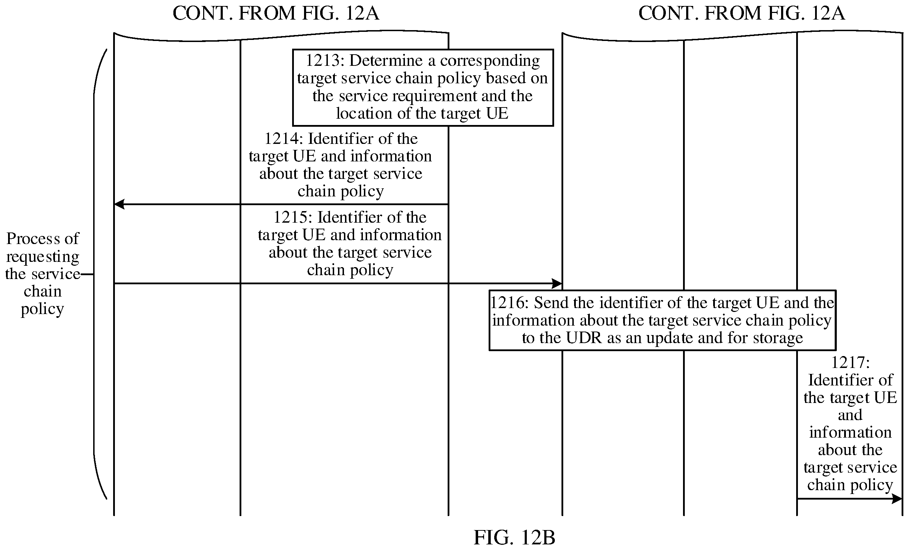

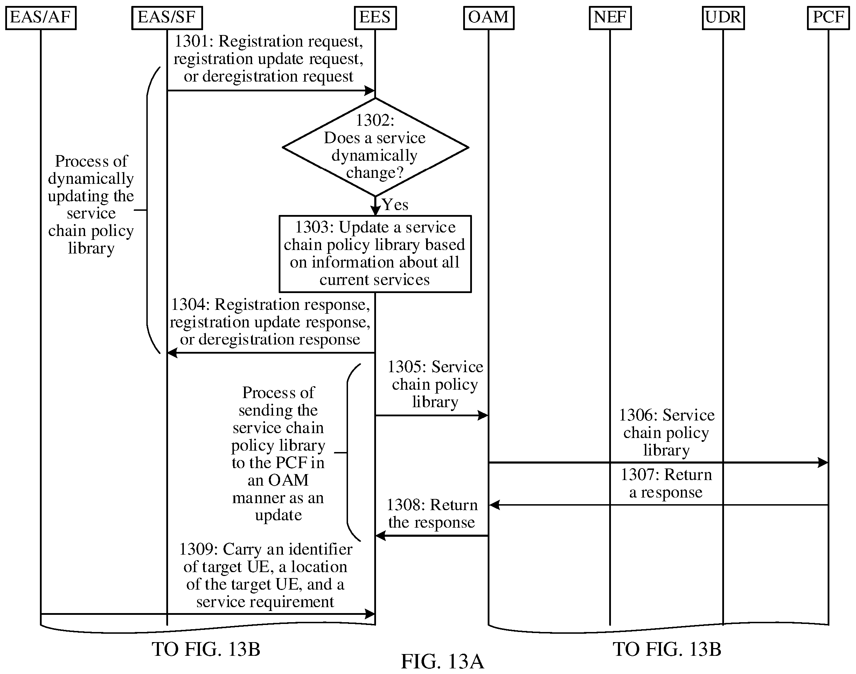

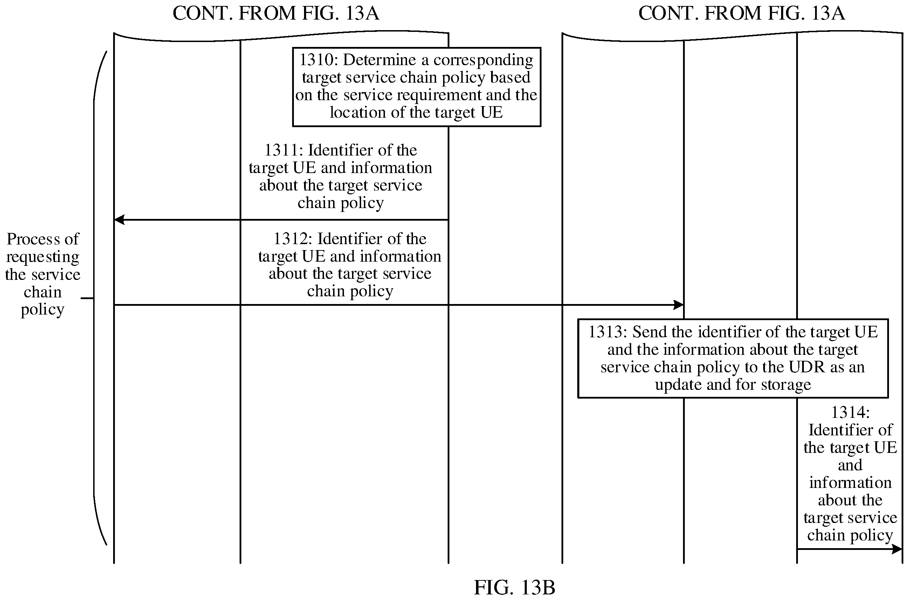

An example in which the EES is used as the first network function entity to update the service chain policy library may be shown in FIG. 6a. When service functions are deployed on a same EES, an EAS 3/SF 3 may send information about a newly added, updated, or to-be-deleted service to the EES. The EES may determine a changed service based on a dynamic change of the service (for example, a service is newly added, a service is deleted, or a service is updated), and update the service chain policy library based on the changed service, to update the service chain policy library. For an example method procedure in which the EES is used as a device for maintaining a service policy library (that is, the first network function entity) to dynamically update the service policy library, refer to FIG. 12A and FIG. 12B or FIG. 13A and FIG. 13B.

It may be understood that, in different cases, implementations of updating the service chain policy library may be different. For example, if the service chain policy library is empty or does not exist before the update, updating the service chain policy library refers to generating and storing the service chain policy library based on a service change status. If a service chain policy already exists in the service chain policy library before the update, updating the service chain policy library refers to generating a new service chain policy library based on a service change status, and replacing the original service chain policy library with the newly generated service chain policy library.

An example of dynamically updating the service policy library is as follows: There are two services in a network, for example, an SF 1 and an SF 2, and a corresponding service chain policy library may be shown in Table 1. When a new service, for example, an SF 3, is added, updated services include the SF 1, the SF 2, and the SF 3, and the corresponding service chain policy library may be shown in Table 2.

**Table 2: Example of updating a service chain policy library**

| Service chain policy ID | Service chain |
|---|---|
| 1 | SF 1 |
| 2 | SF 2 |
| 3 | SF 3 |
| ... | ... |
| 14 | SF 3 → SF 1 → SF 2 |
| 15 | SF 3 → SF 2 → SF 1 |

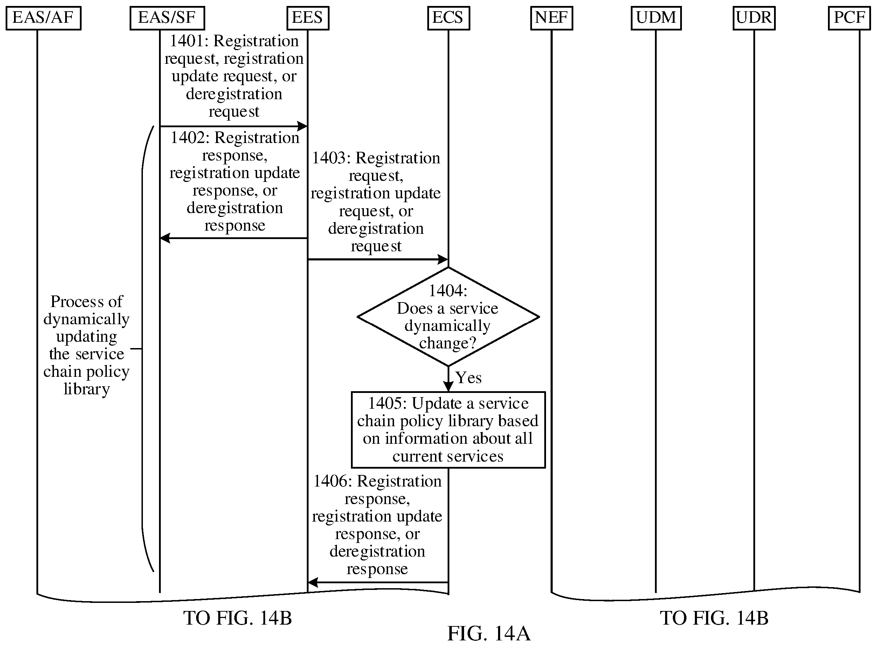

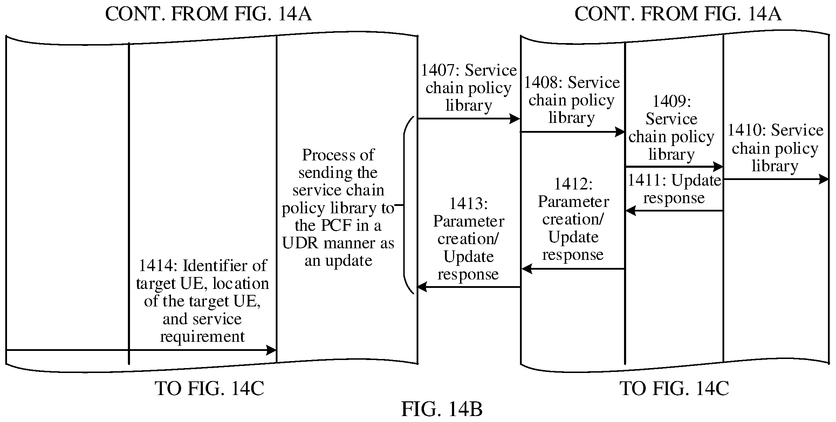

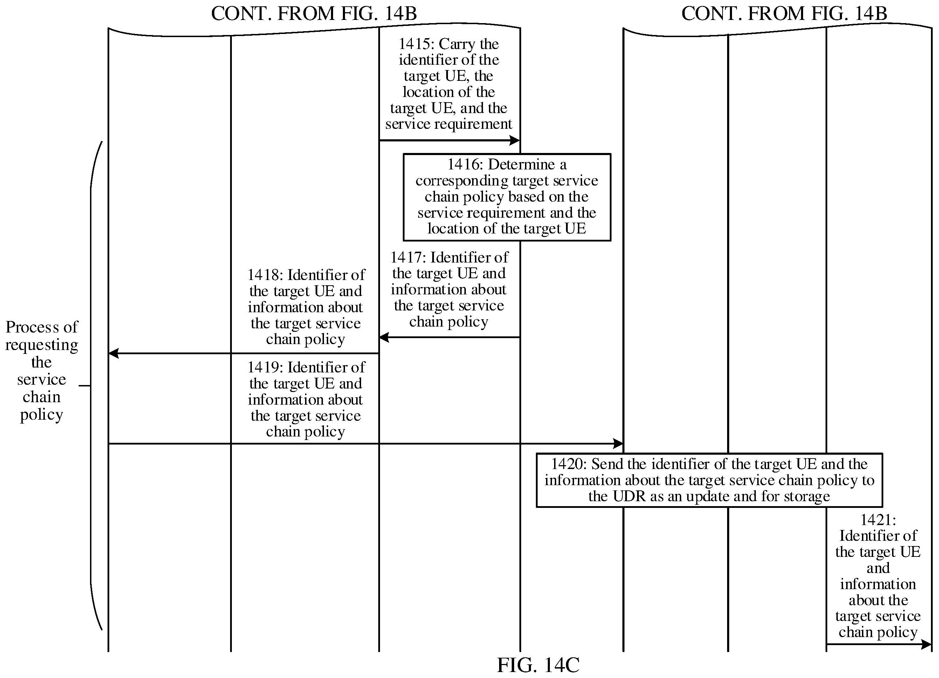

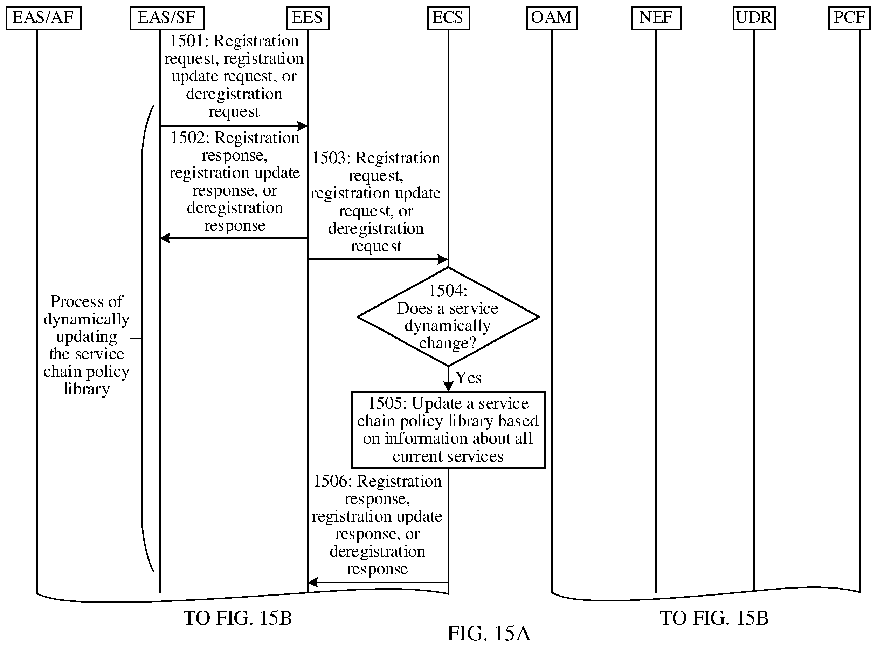

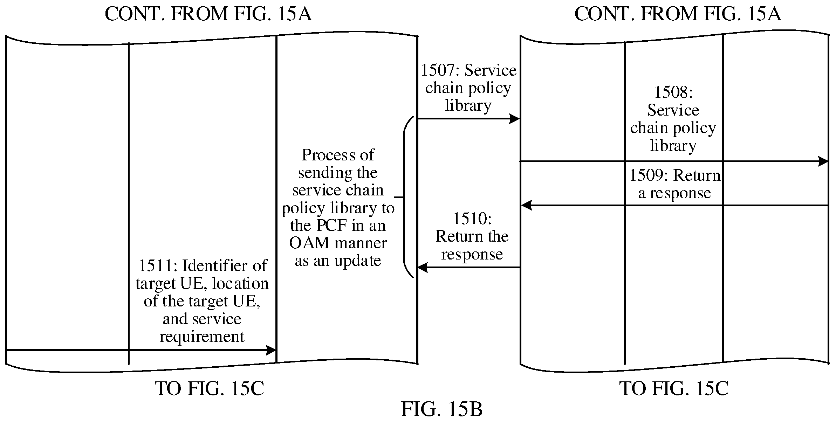

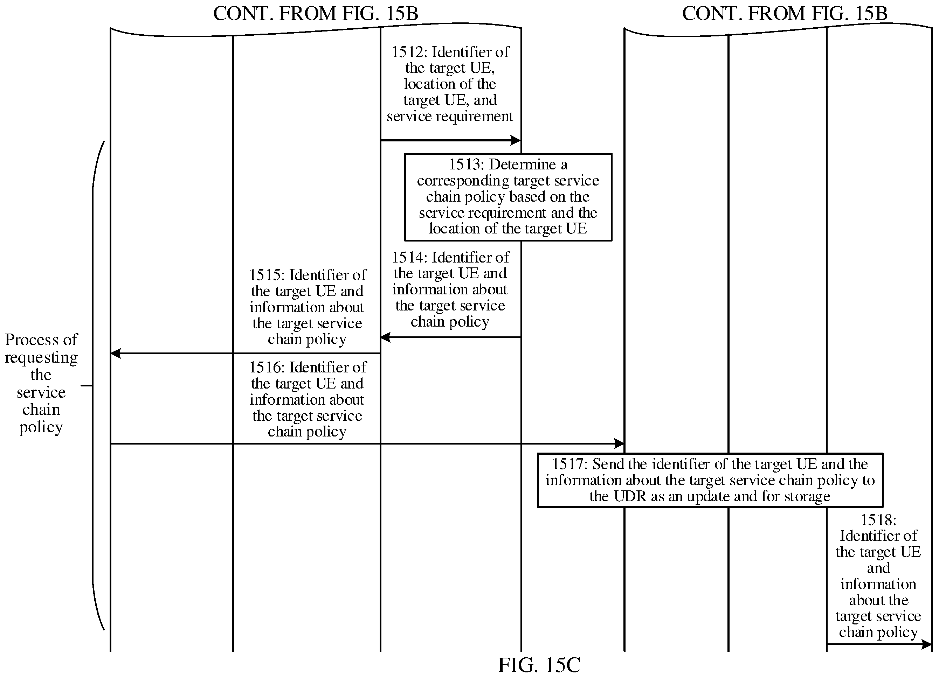

An example in which the ECS is used as the first network function entity to update the service chain policy library may be shown in FIG. 6b. When services are deployed on a plurality of EESs, an EAS 3/SF 3 may send information about a newly added, updated, or to-be-deleted service to an associated EES (for example, an ESS 2 in the figure). The associated EES may send the information about the service to the ECS. The ECS may determine a changed service based on a dynamic change of the service (for example, a service is newly added, a service is deleted, or a service is updated), and update the service chain policy library based on the changed service, to update the service chain policy library. For an example method procedure in which the ECS is used as a device for maintaining a service policy library (that is, the first network function entity) to dynamically update the service policy library, refer to FIG. 14A to FIG. 14C or FIG. 15A to FIG. 15C.

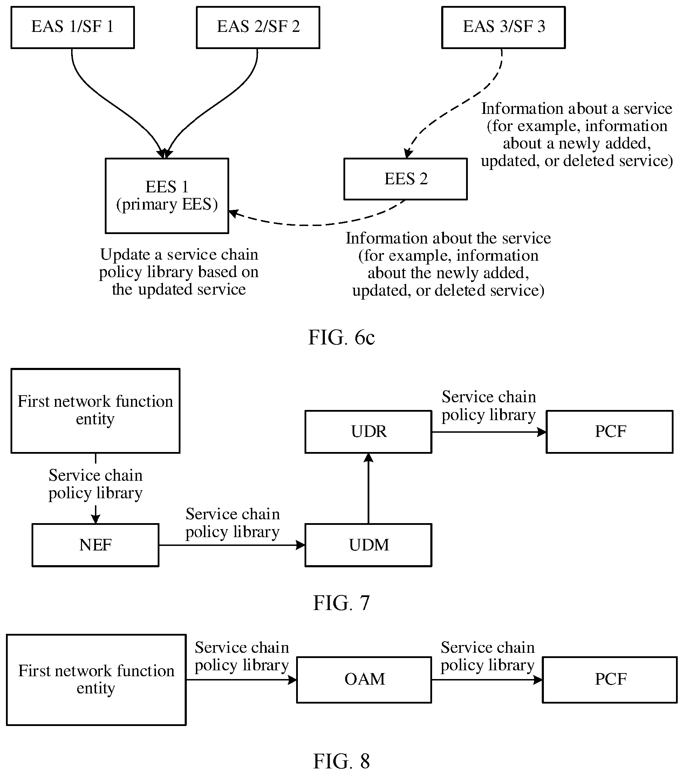

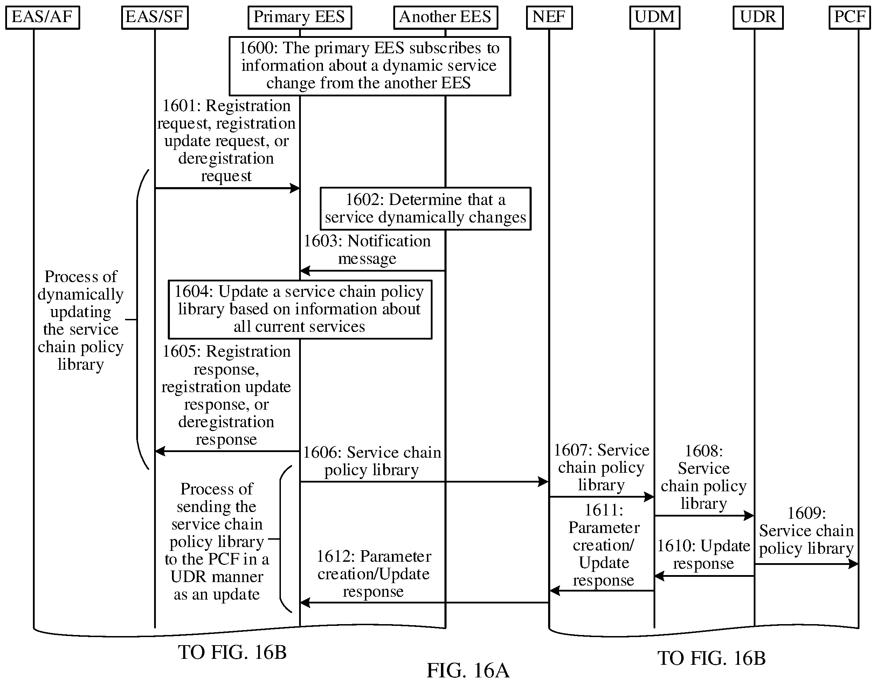

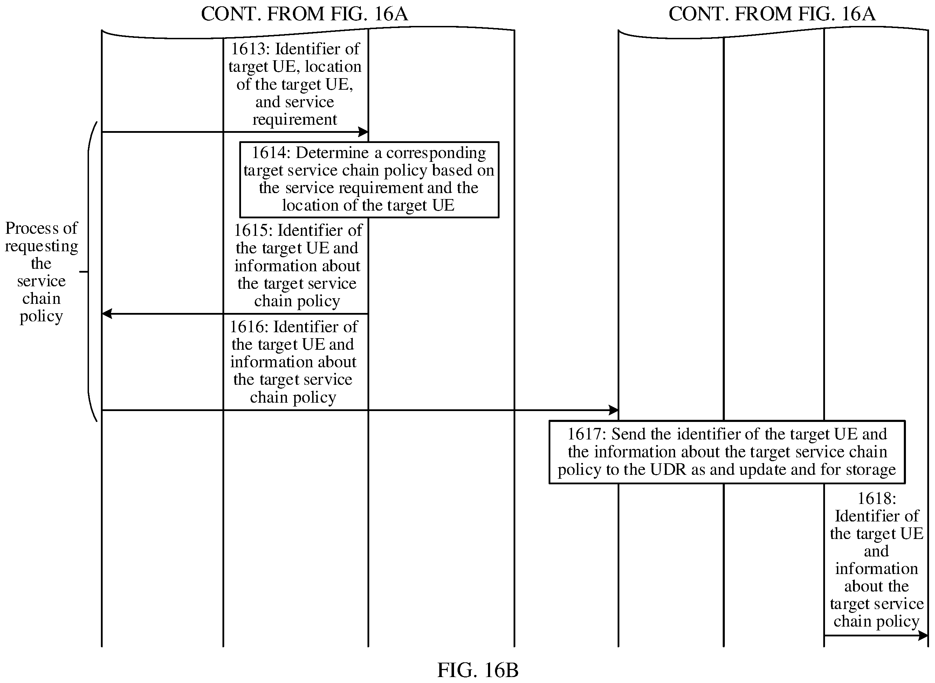

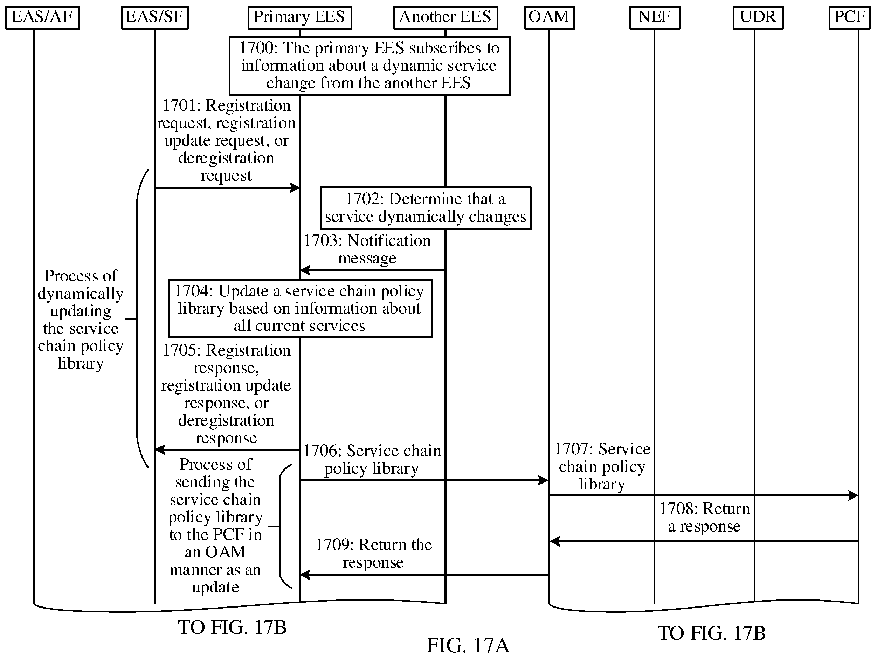

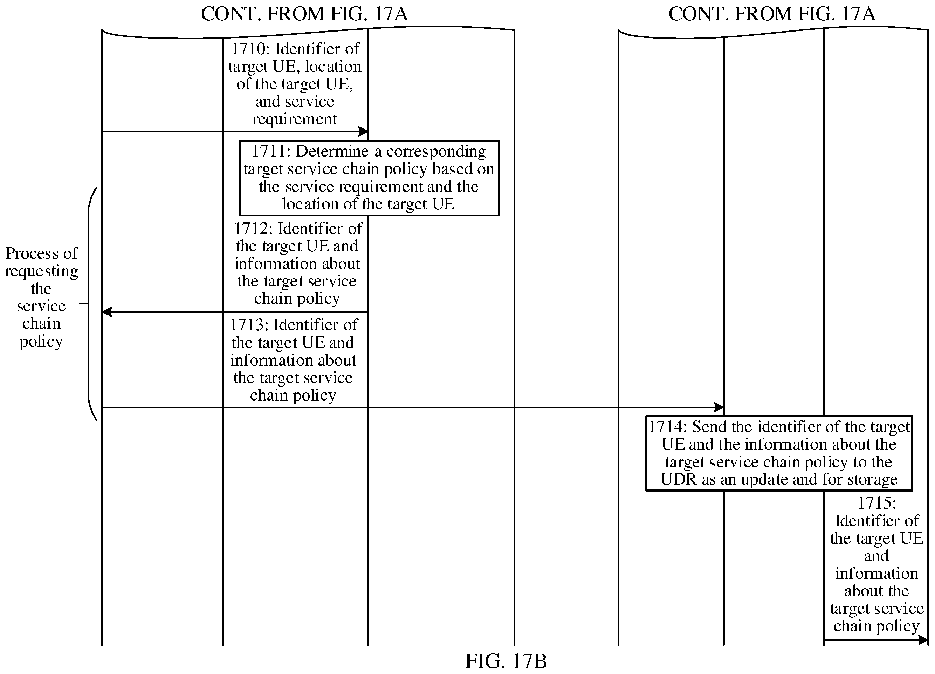

An example in which the primary EES is used as the first network function entity to update the service chain policy library may be shown in FIG. 6c. When services are deployed on a plurality of EESs, an EAS 3/SF 3 may send information about a service (for example, information about a newly added, updated, or to-be-deleted service) to an associated EES (for example, an EES 2 in the figure). The associated EES may send the information about the service to the primary EES (for example, an EES 1 in the figure). The primary EES may determine a changed service based on a dynamic change of the service (for example, a service is newly added, a service is deleted, or a service is updated), and update the service chain policy library based on the changed service, to dynamically update the service chain policy library. For an example method procedure in which the primary EES is used as a device for maintaining a service policy library to dynamically update the service policy library, refer to FIG. 16A and FIG. 16B or FIG. 17A and FIG. 17B.

When services are deployed on different EESs, the primary EES is one of a plurality of EESs and is responsible for collecting information about a service in a network. The primary EES may determine, based on the collected information about the service, whether the service dynamically changes (for example, whether a new service is added or whether a service needs to be deleted). If the service dynamically changes, the primary EES may be responsible for dynamically updating the service chain policy library.

Optionally, the primary EES may be preconfigured, or may be determined through negotiation between EESs, or an EES that a service (for example, a firewall function) is deployed on or registered with is specified as the primary EES. This is not limited in this embodiment of this application.

That the SA6 MEC architecture supports service chain deployment is used as an example above. In this architecture, the device responsible for maintaining the service chain policy library may be the EES, ECS, or primary EES. For a new application enabling architecture that may appear in the future, a principle in this embodiment of this application may also be applied to dynamically update the service chain policy library.

In some embodiments of this application, the service chain policy library may be sent to a function entity for performing policy control (for example, a PCF) in a UDR manner or in an operation, administration and maintenance (operation, administration, and maintenance, OAM) manner as an update, to perform service chain control on a subsequent service flow.

An example based on the UDR manner is as follows: The first network function entity sends the service chain policy library to the PCF as an update via the UDR. FIG. 7 is a diagram of an example of a procedure in which the first network function entity updates the service chain policy library in the UDR manner. The first network function entity (for example, the EES, the ECS, or the primary EES) sends the service chain policy library to an NEF. The NEF sends the service chain policy library to a UDM. The UDM sends the service chain policy library to the UDR. The UDR sends the service chain policy library to the PCF. After receiving the service chain policy library, the PCF updates a local service chain policy library, for example, replaces a previously stored service chain policy library with the received service chain policy library.

Optionally, the procedure shown in FIG. 7 may comply with a stipulation of an existing related protocol.

An example based on the OAM manner is as follows: The first network function entity sends the service chain policy library to the PCF as an update via a network management system such as an OAM device. FIG. 8 is a diagram of an example of a procedure in which the first network function entity updates the service chain policy library in the OAM manner. The first network function entity (for example, the EES, the ECS, or the primary EES) sends the service chain policy library to the OAM. The OAM sends or configures the service chain policy library to the PCF. After receiving the service chain policy library, the PCF updates a local service chain policy library, for example, replaces a previously stored service chain policy library with the received service chain policy library.

Optionally, the procedure shown in FIG. 8 may comply with a stipulation of an existing related protocol.

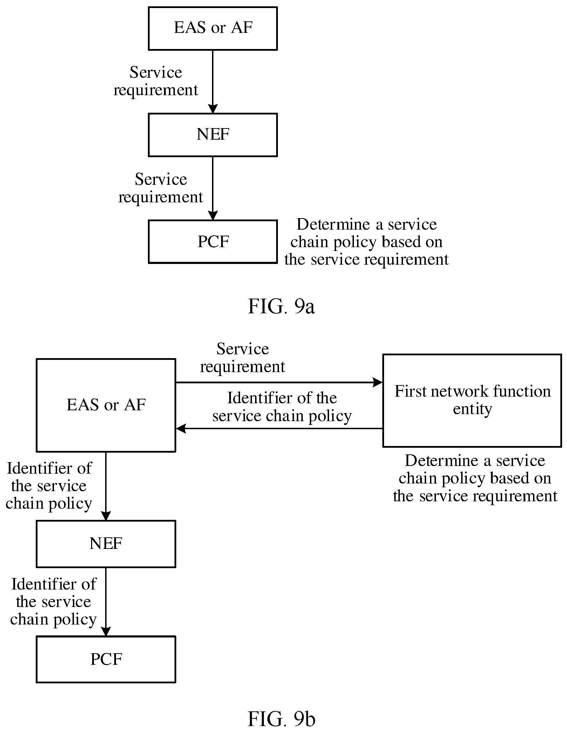

In some embodiments of this application, a service chain policy request entity (for example, an EAS or an AF) may send, via a related network function entity, a service requirement to a network function entity (for example, a PCF) for performing service chain policy control, and the network function entity for performing service chain policy control obtains, based on a service chain policy library, a target service chain policy corresponding to the service requirement. FIG. 9a shows an example of the foregoing procedure.

As shown in FIG. 9a, the EAS or the AF sends the service requirement to an NEF, the NEF sends the service requirement to the PCF, and the PCF selects, from the service chain policy library based on the service requirement, the target service chain policy corresponding to the service requirement. It may be understood that the foregoing uses only the NEF as an example for description. The EAS or the AF may alternatively send the service requirement to the PCF via another network function entity. This is not limited in this application.

In another embodiment of this application, a service chain policy request entity (for example, an EAS or an AF) may send a service requirement to a first network function entity. The first network function entity obtains, based on a service chain policy library, a target service chain policy corresponding to the service requirement, and then sends, via a related network function entity, information (for example, an identifier of the target service chain policy) about the target service chain policy to a network function entity (for example, a PCF) for performing service chain policy control. In this way, the PCF does not need to understand a specific service requirement, that is, does not need to perform an operation of converting (or mapping) the service requirement to the target service chain policy, to reduce processing overheads of the PCF. FIG. 9b shows an example of the foregoing procedure.

As shown in FIG. 9b, the EAS or the AF sends the service requirement to the first network function entity (for example, an EES, an ECS, or a primary EES). The first network function entity selects, from the service chain policy library based on the service requirement, the target service chain policy corresponding to the service requirement, and returns the information (for example, the identifier of the target service chain policy) about the target service chain policy to the EAS or the AF. The EAS or the AF sends the information about the target service chain policy to an NEF, and the NEF sends the information about the target service chain policy to the PCF, to indicate the corresponding target service chain policy to the PCF. It may be understood that the foregoing uses only the NEF as an example for description. The EAS or the AF may alternatively send the service requirement to the PCF via another network function entity. This is not limited in this application.

In a possible implementation, an implementation in which the first network function entity selects the service chain policy from the service chain policy library based on the service requirement is as follows: The first network function entity queries a correspondence between the service requirement and the service chain policy in the service chain policy library based on the service requirement, to obtain the target service chain policy corresponding to the service requirement, and may further obtain the information (for example, the identifier of the target service chain policy) about the target service chain policy. In another possible implementation, the first network function entity may determine, according to a mapping rule between the service requirement and the service chain policy in the service policy library, the target service chain policy corresponding to the service requirement, to obtain the information (for example, the identifier of the target service chain policy) about the target service chain policy. Therefore, the foregoing process may also be expressed as follows: The first network function entity converts (or maps) the service requirement into the information (for example, the identifier of the target service chain policy) about the corresponding target service chain policy based on the service chain policy library.

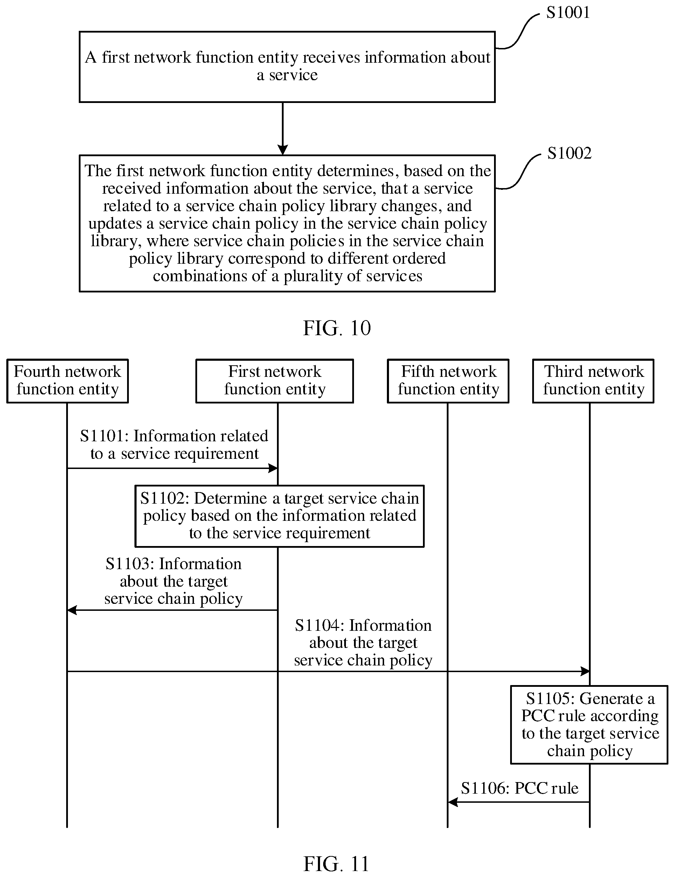

With reference to FIG. 10, the following describes a procedure of dynamically updating a service chain policy library according to an embodiment of this application.

FIG. 10 is a procedure of dynamically updating a service chain policy library according to an embodiment of this application. The procedure may be applied to a mobile edge computing system, for example, the system shown in FIG. 4. The system includes a first network function entity. The first network function entity may be a network function entity (for example, the EES in the system shown in FIG. 4) that is for receiving service registration and that is in the system, or may be a network function entity (for example, the ECS in the system shown in FIG. 4) for data network configuration in the system, or may be a primary device in a plurality of network function entities for receiving service registration. The first network function entity may dynamically update the service chain policy library.

As shown in FIG. 10, the procedure may include the following steps.

Step 1001: The first network function entity (also referred to as a network function entity) receives information about a service.

In a possible implementation, the information about the service may include one or more of the following: information about a newly added service, information about a to-be-deleted service, and information about a to-be-updated service.

In a possible implementation, the information about the service may include an identifier of the service. The identifier of the service may uniquely identify a service within a specific range.

Optionally, the information about the service may alternatively include one or more of the following information.
- Information about a service provider, for example, indication information of the service provider.

In some scenarios, if the identifier of the service is defined by the provider, the information about the service may further include the information of the service provider in addition to the identifier of the service. In this way, the identifier of the service and the information of the service provider may be combined together to uniquely identify a service.
- Indication information of a data network to which the service belongs, for example, a data network access identifier (for example, an SF DNAI) of the service, indicating a deployment location of the service (that is, a data network in which the service is deployed). For example, for a service, a network access identifier of the service is used to identify a corresponding edge data network, and the service is deployed in the edge data network, that is, the service is deployed in the edge data network corresponding to the data network access identifier.

In some scenarios, the first network function entity is an ECS, and the ECS may provide a registration service for EESs in a plurality of data networks. The ECS may determine, based on the SF DNAI of the service, the data network in which the service is deployed, to determine a changed service in the data network, and update the service chain policy library for the data network.
- Endpoint information of the service, where the endpoint information of the service may include information such as an address (for example, an IP address) of the service.

Certainly, the information about the service may further include another type of information. This is not limited in this embodiment of this application.

In a possible implementation, the information about the service is carried in a registration message, and the registration message is for service registration. Certainly, the information about the service may alternatively be carried in another message. This is not limited in this embodiment of this application.

In a possible implementation, the first network function entity is the network function entity for receiving service registration, and the first network function entity may receive the information about the service from an edge application server or a service function entity. For example, the first network function entity may receive the registration message from the edge application server or the service function entity, where the registration message includes the information about the service.

A possible implementation of carrying the information about the service in the registration message is applicable to a case in which the first network function entity is the network function entity that is for receiving service registration and that is in the edge computing system. For example, the first network function entity is the EES in the system shown in FIG. 4, and is particularly applicable to a scenario in which the service is deployed on a single EES.

For example, an implementation in which the first network function entity receives the information about the service may be as follows: The edge application server (for example, an EAS) or the service function entity (for example, an SF entity) sends the registration message to the network function entity (for example, an EES) for receiving service registration, where the registration message includes the information about the service. After receiving the registration message, the network function entity (for example, the EES) for receiving service registration may obtain the information about the service included in the registration message, and may determine, based on the information about the service, whether a service related to the service chain policy library changes. In this implementation, registration initiated by the edge application server (for example, the EAS) or the service function entity (for example, the SF entity) can be implemented, so that the first network function entity determines whether an update of the service chain policy library needs to be triggered. An example of this implementation may be shown in FIG. 6a.

The service related to the service chain policy library is a service for generating a service chain policy. The service chain policy may be generated based on the service or an ordered combination of the service and another service. The generated service chain policy may be stored in the service chain policy library.

The registration message may be a registration request message, and the registration request message includes information about a newly added service, for example, information about one or more services that are requested to be added. The registration message may alternatively be a deregistration message, and the deregistration message includes information about a to-be-deleted service, for example, information about one or more services that are requested to be deleted. The registration message may alternatively be a registration update request message, and the registration update request message includes information about a to-be-updated service, for example, information about a service that is requested to be updated. For example, the registration update request message may include an identifier of a service 1 and an identifier of a service 2, indicating that adding the service 1 and deleting the service 2 are requested, that is, the original service 2 needs to be replaced with the newly added service 1. For another example, the registration update request message may include a version number of the service, indicating that a service of an old version in the system needs to be replaced with the service of the version.

In a possible implementation, the first network function entity is the network function entity for data network configuration, and the first network function entity may receive the information about the service from the network function entity for receiving service registration. For example, the first network function entity may receive the registration message from the network function entity for receiving service registration, where the registration message includes the information about the service.

A possible implementation of carrying the information about the service in the registration message is applicable to a case in which the first network function entity is the network function entity for data network configuration in the edge computing system. For example, the first network function entity is the ECS in the system shown in FIG. 4. In this case, the network function entity for receiving service registration is referred to as a second network function entity (for example, the EES in FIG. 4), and is particularly applicable to a scenario in which the services are deployed on a plurality of EESs.

For example, an implementation in which the first network function entity receives the information about the service may be as follows: The network function entity (for example, the EES) for service registration sends the registration message to the network function entity (for example, the ECS) for data network configuration, where the registration message includes the information about the service. After receiving the registration message, the network function entity (for example, the ECS) for data network configuration may obtain the information about the service included in the registration message, and may determine, based on the information about the service, whether a service related to the service chain policy library changes.

Optionally, the registration message is sent by the network function entity (for example, the EES) for service registration based on the registration message (the information about the service included in the registration message) from an edge application server or a service function entity. In other words, the edge application server or the service function entity first sends the registration message to the network function entity (for example, the EES) for service registration, to request to perform service-related registration processing. Then the network function entity (for example, the EES) for service registration sends the registration message to the network function entity (for example, the ECS) for data network configuration, to send the information about the service to the network function entity (for example, the ECS) for data network configuration. In this implementation, registration initiated by the network function entity (for example, the EES) for service registration can be implemented, so that the first network function entity determines whether an update of the service chain policy library needs to be triggered. An example of this implementation may be shown in FIG. 6b.

The registration message may be a registration request message, and the registration request message includes information about a newly added service, for example, includes information about one or more services that are requested to be added. The registration message may alternatively be a deregistration message, and the deregistration message includes information about a to-be-deleted service, for example, includes information about one or more services that are requested to be deleted. The registration message may alternatively be a registration update request message. The registration update request message includes information about a to-be-updated service, for example, includes information about one or more services that are requested to be updated, for example, includes information about an added service 1 and information about a service 2 that is requested to be deleted, indicating that the original service 2 is replaced with the service 1.

In a possible implementation, the first network function entity is the network function entity for receiving service registration, and that the first network function entity receives information about a service includes: The first network function entity receives the information about the service from another network function entity for receiving service registration. The first network function entity may be a primary device in a plurality of network function entities for receiving service registration.

In a possible implementation, the information about the service is carried in a notification message. This implementation is applicable to a case in which the first network function entity is the network function entity that is for receiving service registration and that is in the edge computing system. For example, the first network function entity is the primary EES in the system shown in FIG. 4.

For example, the first network function entity is the primary device in the plurality of network function entities that are for service registration and that are in the edge computing system. When detecting that a service related to the service chain policy library changes (for example, a service is added, a service is deleted, or a service is updated), another network function entity for service registration except the primary device may send the notification message to the primary device. The notification message includes information about the service, for example, may include information about a newly added service, information about a to-be-deleted service, or information about a to-be-updated service.

Optionally, the primary device may subscribe to service change information from another network function entity except the primary device in the plurality of network function entities that are for receiving service registration and that are in the edge computing system. In this way, when detecting the service related to the service chain policy library changes, the another network function entity may send the notification message to the primary device based on a subscription relationship. The another network function entity may send the notification message to the primary device after receiving a registration request message, a deregistration message, or a registration update message sent by an edge application server or a service function entity, that is, when a service is requested to be added, deleted, or updated. Certainly, the another network function entity may alternatively detect, in another manner, whether the service related to the service chain policy library changes. This is not limited in this embodiment of this application. An example of this implementation may be shown in FIG. 6c.

Optionally, the primary device may alternatively receive a registration message sent by an edge application server or a service function entity associated with the primary device (for example, the associated edge application server or service function entity sends the service registration information to the primary device). In this case, the primary device may determine, based on the registration message, whether the service related to the service chain policy library changes, to update the service chain policy library. The primary EES and the edge application server (for example, the EAS) are used as an example, information about an edge application server (for example, the EAS) is configured on the primary EES by using a management system, and the primary EES is referred to as an EES associated with the edge application server (EAS).

Step 1002: The first network function entity determines, based on the received information about the service, that the service related to the service chain policy library changes, and updates the service chain policy in the service chain policy library.

Optionally, service chain policies in the service chain policy library correspond to different ordered combinations of a plurality of services. For example, the service chain policy library may include a plurality of service chain policies, each service chain policy corresponds to an ordered combination of a group of services (including a plurality of services), and different service chain policies correspond to different ordered combinations of services. Certainly, the service chain policy library may further include a service chain policy of only one service.

Optionally, after receiving the information about the service, the first network function entity may first determine whether the service related to the service chain policy library changes.

In a possible implementation, the information about the service received by the first network function entity includes the information about the newly added service, and the first network function entity may determine, based on the information about the service, the newly added service related to the service chain policy library. For example, the first network function entity may determine changed services based on an existing service and the newly added service, where the changed services include the existing service and the newly added service. The first network function entity may update the service chain policy in the service chain policy library based on the changed services. Optionally, after the service chain policy in the service chain policy library is updated, the service chain policy library includes updated service chain policies, the updated service chain policies correspond to different ordered combinations of a plurality of services, and the plurality of services include the newly added service.

Based on the foregoing implementation, if the information about the service received by the first network function entity includes the information about the newly added service, for example, a registration request message (carrying the information about the service that is requested to be added) is received, the first network function entity may compare the newly added service with the currently existing service based on the information about the newly added service, to determine whether the service related to the service chain policy library changes. If the service related to the service chain policy library changes, the service chain policy library may be updated. Otherwise, the service chain policy library does not need to be updated.

In a possible implementation, the information about the service received by the first network function entity includes the information about the to-be-deleted service, and the first network function entity may determine, based on the information about the service, the to-be-deleted service in services related to the service chain policy library. For example, the first network function entity may determine a changed service based on an existing service and the to-be-deleted service, where the changed service includes a service other than the to-be-deleted service in the existing service. The first network function entity may update the service chain policy in the service chain policy library based on the changed service. Optionally, after the service chain policy in the service chain policy library is updated, the service chain policy library includes updated service chain policies, the updated service chain policies correspond to different ordered combinations of a plurality of services, and the plurality of services do not include the to-be-deleted service.

Based on the foregoing implementation, if the information about the service received by the first network function entity includes the information about the to-be-deleted service, for example, a deregistration message (carrying the information about the service that is requested to be deleted) is received, the first network function entity may determine, based on the information about the service that is requested to be deleted, whether the service that is requested to be deleted exists in the existing service, to determine whether the service related to the service chain policy library changes. If the service related to the service chain policy library changes, the service chain policy library may be updated. Otherwise, the service chain policy library does not need to be updated.

In a possible implementation, the information about the service received by the first network function entity includes the information about the to-be-updated service, and the first network function entity may determine, based on the information about the service, the to-be-updated service in services related to the service chain policy library. For example, the first network function entity may determine changed services based on an existing service and the to-be-updated service, where the changed services include an updated service and a service that is not updated in the existing service. The first network function may update the service chain policy in the service chain policy library based on the changed services. Optionally, after the service chain policy in the service chain policy library is updated, the service chain policy library includes updated service chain policies, the updated service chain policies correspond to different ordered combinations of a plurality of services, and the plurality of services include the to-be-updated service.

Based on the foregoing implementation, if the information about the service received by the first network function entity includes the information about the to-be-updated service, for example, a registration update request message (carrying the information about the service that is requested to be updated) is received, the first network function entity may compare the service that is requested to be updated with the existing service based on the information about the service that is requested to be updated, to determine whether the service related to the service chain policy library changes. If the service changes, the service chain policy library may be updated. Otherwise, the service chain policy library does not need to be updated.

That the EES is used as a device (that is, the first network function entity) for maintaining the service chain policy library is used as an example. Refer to FIG. 6a. The EES may provide a service registration-related service for a plurality of EASs. Different EASs may request to add or delete a same service. After receiving a registration message sent by the EAS, the EES may first determine, based on the service that is requested to be registered, deregistered, or updated by the registration message, whether the service related to the service chain policy library changes, and then update the service chain policy library when determining that the service related to the service chain policy library changes, to prevent the EES from repeatedly updating the service chain policy library when a plurality of EASs request to add or delete a same service.

Similar to the foregoing case, when the primary EES or the ECS is used as a device for maintaining the service chain policy library, when a plurality of EASs request to add or delete a same service, the foregoing manner may be used to prevent the primary EES or the ECS from repeatedly performing an operation of updating the service chain policy library.

In a possible implementation, the first network function entity may further receive indication information, where the indication information indicates whether the edge application server or the service function entity has a service providing capability. For example, the registration message sent by the EAS may include the indication information, indicating whether the EAS has the service providing capability. It may also be understood that the indication information indicates a type of the EAS, that is, whether the type of the EAS is a type that can provide a service capability. Optionally, the EAS may be classified depends on whether the service capability can be provided, for example, may be classified into an ordinary device type that cannot provide the service capability and a device type that can provide the service capability. Correspondingly, if the indication information indicates that the edge application server or the service function entity has the service providing capability, the first network function entity may update the service chain policy library only after determining that the service related to the service chain policy library changes. If the indication information indicates that the edge application server or the service function entity does not have the service providing capability or the first network function entity does not receive the indication information, the first network function entity may not need to update the service chain policy library. In this implementation, it is ensured that the service chain policy library is updated only for a request of a device that can provide the service capability, to improve reliability.

In a possible implementation, after updating the service chain policy library, the first network function entity may further send the updated service chain policy library to a third network function entity, or send the updated service chain policy library to the third network function entity via at least one related network function entity. The third network function entity may perform service chain policy control based on the service chain policy library. For example, the third network function entity may be a PCF.

Optionally, in an implementation of sending the service chain policy library to the third network function entity (for example, the PCF) as an update, the service chain policy library sent by the first network function entity may be sent to the third network function entity (for example, the PCF) via a network exposure function entity, a unified data management entity, and a unified data repository entity sequentially, or may be sent to the third network function entity (for example, the PCF) via a unified data management entity and a unified data repository entity sequentially. An example of this implementation may be shown in FIG. 7.

Optionally, in another implementation of sending the service chain policy library to the third network function entity (for example, the PCF) as an update, the service chain policy library sent by the first network function entity may be sent to the third network function entity (for example, the PCF) via an operation, administration, and maintenance entity. An example of this implementation may be shown in FIG. 8.

In the foregoing embodiment of this application, when determining that the service related to the service chain policy library changes, the first network function entity may update the service chain policy library, to dynamically configure the service chain policy, so as to adapt to a scenario in which a service is dynamically deployed. Further, when the service chain policy library is configured statically (for example, the service chain policy library is configured manually), the service chain policy library is usually configured based on a specified period, or the service chain policy library is configured based on a requirement, and a dynamic change of a service cannot be sensed. Therefore, the service chain policy library cannot be updated in a timely manner when the service changes, and an updated service chain policy cannot be used in a timely manner to perform service control. Therefore, in comparison with a problem that the service chain policy library is not updated in a timely manner because the service chain policy library is configured statically (for example, the service chain policy library is configured manually), in this embodiment of this application, the service chain policy library can be updated in a timely manner based on a service change, and further accuracy can be improved.

In a possible implementation, after dynamically updating the service chain policy library, the first network function entity may determine, based on the updated service chain policy library in response to a request for obtaining the service chain policy, a target service chain policy corresponding to a service requirement, and send information (for example, an identifier of the target service chain policy) about the target service chain policy to a network function entity (for example, the edge application server or the application function entity) that sends the request, so that the network function entity sends the information about the target service chain policy to a network function entity (for example, the PCF) for performing policy control. An example of the foregoing process may be shown in FIG. 11.

FIG. 11 is a schematic flowchart of requesting a service function policy according to an embodiment of this application. As shown in the figure, the procedure may include the following steps.

S1101: A fourth network function entity sends a request message to a first network function entity, where the request message includes information related to a service requirement.

Optionally, the fourth network function entity is a device for requesting a service chain policy. For example, the fourth network function entity may include an edge application server or an application function entity (AF).

Optionally, the request message is used to request the service chain policy, and may be, for example, a service chain policy request (SFC policy request).

Optionally, the request message may include an identifier (UE ID) of a terminal device, and may further include location information (UE location) of the terminal device, information about the service requirement, and the like. Optionally, the information about the service requirement may include a service type, for example, video optimization or TCP acceleration.

One or more of the information such as the identifier of the terminal device, the location information of the terminal device, and the information about the service requirement may be used as a basis of policy decision of the service chain policy. The "information related to the service requirement" in this embodiment of this application may include one or more of the foregoing information.

S1102: The first network function entity selects a target service chain policy from an updated service chain policy library based on the information related to the service requirement.

For example, the first network function entity may determine the target service chain policy based on the information related to the service requirement, for example, determine services that a service flow of the UE needs to pass through and an execution sequence of these services, to obtain information (for example, an identifier of the target service chain policy) about the corresponding target service chain policy based on the service chain policy library.

For another example, the first network function entity may determine, based on the location information of the UE, a service provided by a data network at a corresponding location, and determine services that a service flow of the UE needs to pass through in these services and an execution sequence of these services, to obtain information (for example, an identifier of the target service chain) about the corresponding target service chain policy based on the service chain policy library.

For another example, the first network function entity may obtain a service requirement of the UE based on the UE ID (for example, the service requirement of the UE may be obtained by querying subscription information of the UE), and determine the corresponding target service chain policy based on the service requirement of the UE.

S1103: The first network function entity sends the information (for example, the identifier of the target service chain policy) about the target service chain policy to the fourth network function entity.

S1104: The fourth network function entity sends the information about the target service chain policy to a third network function entity, or sends the information about a target service chain to the third network function entity via a related network function entity.

Optionally, the third network function entity may be a PCF.

For example, an example in which the fourth network function entity sends the information about the target service policy to the third network function entity via the related network function entity is as follows: An EAS sends the information about the target service chain policy to an NEF, the NEF sends the information about the target service chain policy to a UDR, and the UDR sends the information about the target service chain policy to the PCF.

Further, the foregoing procedure may include the following steps.

S1105: The third network function entity queries the service chain policy library based on the information (for example, the identifier of the target service chain policy) about the target service chain policy, to obtain a corresponding service chain policy, and generates a PCC rule according to the service chain policy.

S1106: The third network function entity sends the PCC rule to a fifth network function entity. The fifth network function entity may be a device for session management, for example, an SMF.

Optionally, the PCC rule may include the identifier of the target service chain policy, a corresponding service, and a service sequence.

Further, the fifth network function entity (for example, the SMF) generates an N4 rule (including a PDR rule and an FAR rule) according to the PCC rule, and sends the N4 rule to a network function entity (for example, a UPF) for executing the service chain policy, so that the UPF performs packet detection according to the PDR rule in the received N4 rule, and performs packet forwarding according to the FAR rule, so that a specified service flow sequentially passes through service nodes on a service chain corresponding to the target service policy, to implement the service requirement. For an example of the foregoing implementation, refer to related content in FIG. 5.

In the procedure shown in FIG. 11, for the service chain policy request generated on an AF side, the first network function entity may first determine the corresponding target service chain policy based on the service requirement, and send the information (for example, the identifier of the target service chain policy) about the target service chain policy to the AF, and then the AF sends the information to the PCF. In this way, the PCF does not need to perform an operation of mapping the service requirement to the target service chain policy, to reduce overheads of performing service chain policy conversion by the PCF based on the service requirement.

The following uses the mobile edge computing system architecture shown in FIG. 4 and the 5G system architecture shown in FIG. 1 (or FIG. 2) as an example to show implementation procedures in several specific application scenarios.

FIG. 12A and FIG. 12B show a procedure in which when a service is deployed on a single EES and the EES is responsible for maintaining a service chain policy library, the EES sends an updated service chain policy library to the PCF in a UDR manner as an update.

As shown in FIG. 12A and FIG. 12B, the procedure includes the following steps.

Step 1201: The EAS (or the SF, where the SF is a network function entity capable of providing a service capability) sends a registration request to the EES, where the registration request carries an identifier of a service. The registration request is used to request to register the service with the EES.

Optionally, the registration request may further carry at least one of the following information:
information about a service provider (SF provider), which may be used to decide a service chain policy;
a DNAI, indicating a deployment location of the service; and
endpoint information about the service, indicating an address (for example, an IP address) of the service.

Optionally, the registration request may further carry indication information, where the indication information indicates whether to provide a service capability. That the EAS sends the registration request to the EES is used as an example. The indication information may be understood as a type of the EAS, that is, whether the type of the EAS is a type that can provide the service capability.

Optionally, the foregoing information may be stored in a profile (for example, an EAS profile) corresponding to the EAS (or the SF).

Optionally, the registration request may alternatively be replaced with a registration update request or a deregistration request. For example, if the registration request is replaced with the registration update request, the registration update request carries IDs of at least two services. For example, the registration update request carries a first service ID and a second service ID. The registration update request is used to request to replace a service 1 corresponding to the first service ID with a service 2 corresponding to the second service ID. Alternatively, the registration update request carries updated information about the service. For example, the information about the service previously registered with the first network function entity is SF #1 information, and then updated SF #1 information is provided to the first network function entity by using the registration update request. The updated SF #1 information may overwrite the previous SF #1 information. For example, if the registration request is replaced with the deregistration request, the deregistration request carries at least one service ID, and the deregistration request is used to request to delete a service corresponding to the at least one service ID.

Step 1202: After receiving the registration request, the EES detects whether a service related to the service chain policy library changes. For example, if a new service is requested to be registered, it indicates that the service dynamically changes. For example, if original services include the service 1 and the service 2, and the registration request is used to request to register a service 3, services after a dynamic change include the service 1, the service 2, and the service 3. In this case, the procedure turns to step 1203.

Optionally, when the registration request is replaced with the registration update request, and if the EES detects that one or more services need to be replaced, it indicates that the service dynamically changes. For example, the original services include the service 1, the service 2, and the service 3, and the registration update request is used to request to replace the service 2 with a service 4. In this case, services after the dynamic change include the service 1, the service 4, and the service 3. When the registration request is replaced with the deregistration request, and if the EES detects that one or more services need to be deleted, it indicates that the service dynamically changes. For example, the original services include the service 1, the service 2, and the service 3, and the deregistration request is used to request to delete the service 3. In this case, services after the dynamic change include the service 1 and the service 2.

Optionally, if the EES does not detect that the service related to the service chain policy library changes, the current service chain policy library may remain unchanged.

Step 1203: The EES updates the service chain policy library based on information about all services after the dynamic change.

Optionally, the EES may update, based on all the services after the dynamic change, a service chain policy identifier and related information about a service corresponding to each service chain policy identifier. The related information about the service includes, for example, the service ID, and may further include at least one of the following information: information about a service provider (SF provider), a DNAI, and the like.

For example, original services include the service 1 and the service 2, and the services after the dynamic change include the service 1, the service 2, and the service 3. A service chain policy library before the service dynamically changes is shown in Table 1, and a service chain policy library after a new service is added is shown in Table 2.

Step 1204: After completing service registration, the EES sends a registration response to the EAS (or the SF).

Optionally, when the registration request is replaced with the registration update request, the EES sends a registration update response to the EAS (or the SF) after completing a service registration update in this step. When the registration request is replaced with the deregistration request, the EES sends a deregistration response to the EAS (or the SF) after completing service deregistration in this step.

By using the foregoing steps 1201 to 1204, the EES serves as a device for maintaining and updating the service chain policy library to complete an update operation of the service chain policy library.

Step 1205: The EES serves as the AF, and sends the updated service chain policy library to the NEF.

Optionally, the EES sends a parameter creation request (for example, a Nnef_ParameterProvision_Create request) or a parameter update request (for example, a Nnef_ParameterProvision_Update request) to the NEF, where the parameter creation request or the parameter update request carries information about the updated service chain policy library.

There is no sequence between step 1204 and step 1205. Alternatively, the updated service chain policy library may be sent to the NEF after step 1203 is completed.

Step 1206: The NEF authorizes information provided by the EES, and sends the service chain policy library to the UDM.

Optionally, the NEF sends the parameter creation request (for example, a Nudm_ParameterProvision_Create request) or the parameter update request (for example, a Nudm_ParameterProvision_Update request) to the UDM, where the parameter creation request or the parameter update request carries the information about the updated service chain policy library.

Step 1207: The UDM sends the service chain policy library to the UDR.

Optionally, the UDM sends an update request (for example, a Nudr_DM_Update request) to the UDR, where the update request carries the information about the updated service chain policy library.

Step 1208: The UDR sends the service chain policy library to the PCF.

Optionally, the UDR sends a notification (for example, a Nudr_DM_Notify) to the PCF, where the notification carries the information about the updated service chain policy library.

Step 1209: After sending the service chain policy library to the PCF, the UDR returns a response to the UDM, for example, returns an update response (for example, a Nudr_ DM_Update response).

Step 1210: After receiving the response returned by the UDR, the UDM returns the response to the NEF, for example, returns a parameter creation response (for example, a Nudm_ParameterProvision_Create response) or a parameter update response (for example, a Nudm_ParameterProvision _Update response).

Step 1211: After receiving the response returned by the UDM, the NEF returns the response to the EES, for example, returns the parameter creation response (a Nnef_ParameterProvision_Create response) or the parameter update response (a Nnef_ParameterProvision _Update response).

According to the foregoing steps 1205 to 1211, a service chain policy library that is updated by the device EES for maintaining the service chain policy library is sent to the PCF in a UDR manner as an update.

A mechanism in which the AF transfers a parameter to the PCF in the related technology may be reused in the foregoing procedure of steps 1205 to 1211. A procedure in which the service chain policy library is sent to the PCF is not limited in this embodiment of this application.

Step 1212: When the EAS or the AF has a service requirement, the EAS or the AF sends a service chain policy request to the EES.

Optionally, the service chain policy request may carry an identifier of target UE (Target UE), a location of the target UE (UE location), service requirement information, and the like. For example, when a video service server (the EAS or the AF) that is a video service provider needs to request a service chain processing requirement (for example, performing video optimization or TCP acceleration on a video service of the UE) for a paid user (Target UE) in an area (UE location), the video service server sends the service chain policy request to an entity EES for maintaining the service chain policy library, to obtain information (for example, an identifier of a target service chain policy) about the target service chain policy corresponding to the service requirement.

Step 1213: After receiving the service chain policy request, the device EES for maintaining the service chain policy library determines the target service chain policy corresponding to the service requirement.

Optionally, in this step, the EES may select a matched target service chain policy from the service chain policy library based on service requirement, for example, the service type, the service provider, and the location of the UE.

Step 1214: The EES sends a service chain policy response to the AF, where the response may carry the information (for example, the identifier of the target service chain policy) about the target service chain policy of the target UE.

Step 1215: The EAS or the AF sends information such as the identifier of the target UE and the information (for example, the identifier of the target service chain policy) about the target service chain policy to the NEF.

Optionally, the EAS or the AF sends a Nnef_Trafficinfluence_Create message to the NEF, where the Nnef_Trafficinfluence_Create message carries the identifier of the target UE and the information (for example, the identifier of the target service chain policy) about the target service chain policy of the target UE.

Optionally, when the registration request is replaced with the registration update request, in this step, the EAS or the AF sends a Nnef_Trafficinfluence_Update message to the NEF, where the Nnef_Trafficinfluence_Update message carries the identifier of the target UE and the information (for example, the identifier of the target service chain policy) about the target service chain policy of the target UE. When the registration request is replaced with the deregistration request, in this step, the EAS or the AF sends a Nnef_Trafficinfluence_Delete message to the NEF, where the Nnef_Trafficinfluence_Delete message carries the identifier of the target UE and the information (for example, the identifier of the target service chain policy) about the target service chain policy of the target UE.

Step 1216: The NEF sends the identifier of the target UE and the information (for example, the identifier of the target service chain policy) about the target service chain policy to the UDR as an update and for storage.

Step 1217: The UDR notifies the PCF of the identifier of the target UE and the information (for example, the identifier of the target service chain policy) about the target service chain policy (for example, by sending a Nudr_DM_Notify message to the PCF), to activate a service of the target UE, and perform service control based on a service chain corresponding to the information (for example, the identifier of the target service chain policy) about the target service chain policy. For example, for a subsequent service chain execution procedure, refer to FIG. 5.

According to the foregoing steps 1212 to 1217, for the service requirement of the AF, the EES, served as the device for updating and maintaining the service chain policy library, may determine a corresponding target service chain policy based on the service requirement, and send the information (for example, the identifier of the target service chain policy) about the target service chain policy to the PCF for delivery and execution of a subsequent service rule.

The procedure shown in FIG. 12A and FIG. 12B is merely an example. Some steps may be optional steps, for example, steps for sending a response message. A time sequence of the steps may alternatively be adjusted based on the service requirement. This is not limited in this embodiment of this application.

In the foregoing procedure shown in FIG. 12A and FIG. 12B, for maintenance (for example, generation, update, or deletion) of the service chain policy library and subsequent service chain execution problems, it is proposed that the EAS/SF sends the information about the service to the EES, and the EES maintains the service chain policy library and sends the service chain policy library to the PCF in the UDR manner as an update. In a process of executing the service requirement of the AF, it is proposed that the AF first requests the device EES for maintaining the service chain policy to map or convert the service requirement to the information (for example, the identifier of the target service chain policy) about the target service chain policy. This reduces execution logic of performing service chain policy conversion by the PCF based on the service requirement, that is, the PCF does not need to understand a specific service requirement. Based on the foregoing procedure, the device EES for maintaining the service chain policy may update the service chain policy library based on the information about the service provided by the EAS/SF. In comparison with the related technology in which information about the service chain policy library is preconfigured or manually configured in an OAM manner to the PCF, this procedure can implement an automatic update of the service chain policy library. For the service requirement of the application function AF, the EES converts the service requirement into the information about the target service chain policy, so that the execution logic of performing service chain policy conversion by the PCF based on the service requirement can be reduced.

FIG. 13A and FIG. 13B show a procedure in which when a service is deployed on a single EES and the EES is responsible for maintaining a service policy library, the EES sends an updated service chain policy library to the PCF in an OAM manner as an update.

In the procedure shown in FIG. 13A and FIG. 13B, for a specific implementation of a dynamic update process (steps 1301 to 1304) of the service chain policy library, refer to related content in the procedure shown in FIG. 12A and FIG. 12B. For a specific implementation of a process (steps 1309 to 1314) of requesting the service chain policy, refer to related content in the procedure shown in FIG. 12A and FIG. 12B.

Different from the procedure shown in FIG. 12A and FIG. 12B, in FIG. 13A and FIG. 13B, the EES sends the service chain policy library to the PCF in an OAM manner as an update. As shown in FIG. 13A and FIG. 13B, the process may include the following steps.

Step 1305: The EES sends the updated service chain policy library to an OAM.

Step 1306: After receiving the service chain policy library, the OAM sends the service chain policy library to the PCF.

Step 1307: After receiving the service chain policy library, the PCF stores the service chain policy library, and returns a response message to the OAM.

Step 1308: After receiving the response message, the OAM returns the response message to the EES.

The procedure shown in FIG. 13A and FIG. 13B is merely an example. Some steps may be optional steps, for example, steps for sending the response message. A time sequence of the steps may alternatively be adjusted based on the service requirement. This is not limited in this embodiment of this application.

In the foregoing procedure shown in FIG. 13A and FIG. 13B, for maintenance (for example, generation, update, or deletion) of the service chain policy library and subsequent service chain execution problems, it is proposed that the EAS/SF sends the information about the service to the EES, and the EES maintains the service chain policy library and sends the service chain policy library to the PCF in the OAM manner as an update. In a process of executing the service requirement of the AF, it is proposed that the AF first requests an entity EES for maintaining the service chain policy to map or convert a service requirement to information (for example, an identifier of a target service chain policy) about the target service chain policy. This reduces execution logic of performing service chain policy conversion by the PCF based on the service requirement, that is, the PCF does not need to understand a specific service requirement. Based on the foregoing procedure, the device EES for maintaining the service chain policy may update the service chain policy library based on information about a service provided by the EAS/SF. In comparison with the related technology in which information about the service chain policy library is preconfigured or manually configured in the OAM manner to the PCF, this procedure can implement an automatic update of the service chain policy library. For the service requirement of the application function AF, the EES converts the service requirement into the information about the target service chain policy, so that the execution logic of performing service chain policy conversion by the PCF based on the service requirement can be reduced.

FIG. 14A to FIG. 14C show a procedure in which when services are deployed on a plurality of EESs and the ECS is responsible for maintaining a service policy library, the ECS sends an updated service chain policy library to the PCF in a UDR manner as an update.

As shown in FIG. 14A to FIG. 14C, the procedure includes the following steps.

Step 1401: The EAS (or the SF) sends a registration request to the EES, where the registration request carries a service identifier. The registration request is used to request to register a service corresponding to the service identifier with the EES.

Optionally, the registration request may alternatively be replaced with a registration update request or a deregistration request. For example, if the registration update request is replaced with the registration update request, the registration update request carries at least two service IDs. For example, the registration update request carries a first service ID and a second service ID. The registration update request is used to request to replace a service 1 corresponding to the first service ID with a service 2 corresponding to the second service ID; or the registration update request carries updated information about a service. For example, if the registration request is replaced with the deregistration request, the deregistration request carries at least one service ID, and the deregistration request is used to request to delete a service corresponding to the at least one service ID.

For a specific implementation of this step, refer to step 1201 in the procedure shown in FIG. 12A and FIG. 12B.

Step 1402: After completing registration of the EAS (or the SF), the EES sends a registration response to the EAS (or the SF).

Optionally, when the registration request is replaced with the registration update request, the EES sends a registration update response to the EAS (or the SF) after completing a service registration update in this step. When the registration request is replaced with the deregistration request, the EES sends a deregistration response to the EAS (or the SF) after completing service deregistration in this step.

Step 1403: The EES sends the registration request to the ECS.

Optionally, the registration request may carry information (for example, an EES ID and an EES DNAI) about the EES and information about a service that is requested to be registered. Optionally, the information about the service may include a service ID, and may further include at least one of the following information: a provider, a DNAI, and indication information of the service.

Optionally, the registration request may alternatively be replaced with the registration update request or the deregistration request.

Step 1404: After receiving the registration request, the ECS detects whether a service related to the service chain policy library changes. For example, if a new service is requested to be registered, it indicates that the service dynamically changes. In this case, step 1405 is performed.

In this step, the ECS may detect, based on services registered by the plurality of EESs, whether the service related to the service chain policy library changes.

Optionally, when the registration request is replaced with the registration update request, and if the ECS detects that one or more services need to be replaced, it indicates that the service dynamically changes. When the registration request is replaced with the deregistration request, and if the ECS detects that one or more services need to be deleted, it indicates that the service dynamically changes.

Optionally, if the ECS does not detect that the service related to the service chain policy library changes, the current service chain policy library may remain unchanged.

Step 1405: The ECS updates the service chain policy library based on information about all services after the dynamic change.

A specific implementation in which the ECS updates the service chain policy library is basically the same as a specific implementation in which the EES updates the service chain policy library in FIG. 12A and FIG. 12B.

Step 1406: The ECS sends a registration response to the EES.

Optionally, when the registration request is replaced with the registration update request, the ECS sends a registration update response to the EES in this step. When the registration request is replaced with the deregistration request, the ECS sends a deregistration response to the EES in this step.

By using the foregoing steps 1401 to 1406, the ECS serves as a device for maintaining and updating the service chain policy library to complete an update operation of the service chain policy library.

Steps 1407 to 1413: The ECS sends the service chain policy library to the PCF in a UDR manner as an update. For a specific implementation of the process, refer to related content in FIG. 12A and FIG. 12B. A mechanism in which the ECS transfers a parameter to the PCF in the related technology may be reused in the procedure of steps 1407 to 1413. A procedure in which the service chain policy library is sent to the PCF is not limited in this embodiment of this application.

Steps 1414 to 1421: For a service requirement of the AF, the ECS, served as the device for updating and maintaining the service chain policy library, determines a corresponding target service chain policy based on the service requirement, and sends information (for example, an identifier of the target service chain policy) about the target service chain policy to the PCF for delivery and execution of a subsequent service rule.

For a specific implementation of steps 1414 to 1421, refer to related content shown in FIG. 12A and FIG. 12B. A difference lies in that the service requirement of the application function AF is sent to the ECS, and the ECS maps or converts the service requirement to the information (for example, the identifier of the target service chain policy) about the target service chain policy.

The procedure shown in FIG. 14A to FIG. 14C is merely an example. Some steps may be optional steps, for example, steps for sending a response message. A time sequence of the steps may alternatively be adjusted based on the service requirement. This is not limited in this embodiment of this application.

In the foregoing procedure shown in FIG. 14A to FIG. 14C, for maintenance (for example, generation, update, or deletion) of the service chain policy library and subsequent service chain execution problems, it is proposed that in the scenario in which the services are deployed on the plurality of EESs, the ECS maintains the service chain policy library and sends the service chain policy library to the PCF in the UDR manner as an update. In a process of executing the service requirement of the AF, it is proposed that the ECS maps or converts the service requirement to the information (for example, the identifier of the target service chain policy) about the target service chain policy. This reduces execution logic of performing service chain policy conversion by the PCF based on the service requirement, that is, the PCF does not need to understand a specific service requirement. Based on the foregoing procedure, the device ECS for maintaining the service chain policy may update the service chain policy library based on the information about the service provided by the EAS/SF. In comparison with the related technology in which information about the service chain policy library is preconfigured or manually configured in an OAM manner to the PCF, this procedure can implement an automatic update of the service chain policy library. For the service requirement of the application function AF, the ECS converts the service requirement into the information about the target service chain policy, so that the execution logic of performing service chain policy conversion by the PCF based on the service requirement can be reduced.

FIG. 15A to FIG. 15C show a procedure in which when services are deployed on a plurality of EESs and the ECS is responsible for maintaining a service chain policy library, the ECS sends an updated service chain policy library to the PCF in an OAM manner as an update.

In the procedure shown in FIG. 15A to FIG. 15C, for a specific implementation of a dynamic update process (steps 1501 to 1506) of the service chain policy library, refer to related content in the procedure shown in FIG. 14A to FIG. 14C. For a specific implementation of a process of requesting the service chain policy (steps 1511 to 1518), refer to related content in the procedure shown in FIG. 14A to FIG. 14C.

Different from the procedure shown in FIG. 14A to FIG. 14C, in FIG. 15A to FIG. 15C, the ECS sends the service chain policy library to the PCF in the OAM manner as an update.

The procedure shown in FIG. 15A to FIG. 15C is merely an example. Some steps may be optional steps, for example, steps for sending a response message. A time sequence of the steps may alternatively be adjusted based on the service requirement. This is not limited in this embodiment of this application.

In the foregoing procedure shown in FIG. 15A to FIG. 15C, for maintenance (for example, generation, update, or deletion) of the service chain policy library and subsequent service chain execution problems, it is proposed that in the scenario in which the SFs are deployed on the plurality of EESs, the ECS maintains the service chain policy library and sends the service chain policy library to the PCF in the OAM manner as an update. In a process of executing a service requirement of the AF, it is proposed that the ECS maps or converts the service requirement to information (for example, an identifier of a target service chain policy) about the target service chain policy. This reduces execution logic of performing service chain policy conversion by the PCF based on the service requirement, that is, the PCF does not need to understand a specific service requirement. Based on the foregoing procedure, a device ECS for maintaining the service chain policy may update the service chain policy library based on information about a service provided by the EAS/SF. In comparison with the related technology in which information about the service chain policy library is preconfigured or manually configured in the OAM manner to the PCF, this procedure can implement an automatic update of the service chain policy library. For the service requirement of the application function AF, the ECS converts the service requirement into the information about the target service chain policy, so that the execution logic of performing service chain policy conversion by the PCF based on the service requirement can be reduced.

FIG. 16A and FIG. 16B show a procedure in which when services are deployed on a plurality of EESs and a primary EES is responsible for maintaining a service policy library, the primary EES sends an updated service chain policy library to the PCF in a UDR manner as an update.

As shown in FIG. 16A and FIG. 16B, the procedure may include the following steps.

Step 1600: The primary EES subscribes to information about a dynamic service change from another EES.

When the services are deployed on the plurality of EESs, for example, the plurality of EESs include an EES #1 and an EES #2, the EES #1 is a primary EES, and the EES #2 is another EES. If an existing service SF #1 and an existing service SF #2 are deployed on (or online on or registered with) the EES #1, and a new service SF #3 is currently added on (or online on or registered with) the EES #2, the EES #2 reports, to the primary EES (that is, the EES #1), information that the new service SF #3 is added, and the primary EES (that is, the EES #1) is responsible for updating the service chain policy library.

Optionally, the primary EES may be preconfigured, or may be determined through negotiation between EESs, or an EES that a service (for example, a firewall function) is deployed on or registered with is specified as the primary EES.

Step 1601: The EAS (or the SF) sends a registration request to the primary EES, where the registration request carries a service identifier. The registration request is used to request to register an SF corresponding to the service ID with the EES.

Optionally, the registration request may alternatively be replaced with a registration update request or a deregistration request.

For a specific implementation of this step, refer to step 1201 shown in FIG. 12A and FIG. 12B.

Step 1602: Another EES (such as the EES #2) detects whether a dynamic service change (for example, an operation such as adding, deleting, or updating a service) exists.

Step 1603: When the dynamic service change exists on the another EES, report information about a service that dynamically changes to the primary EES (for example, the EES #1).

Optionally, after determining that the service dynamically changes (for example, a service is added, a service is updated, or a service is deleted), an EES may send information about the dynamic service change to the primary EES. For example, information about a newly added service may be sent to the primary EES, or information about an updated service may be sent to the primary EES, or information about a deleted service may be sent to the primary EES. Information about a service may include a service ID, and may further include at least one of the following information: information about a service provider (SF provider) and a DNAI.

Step 1604: If the primary EES detects that the service dynamically changes, the primary EES updates the service chain policy library based on information about all services after the dynamic change.

For a specific implementation of updating the service chain policy library by the primary EES, refer to step 1203 in the procedure shown in FIG. 12A and FIG. 12B.

Step 1605: The primary EES sends a registration response to the EAS (or the SF).

Optionally, when the registration request is replaced with the registration update request, the primary EES sends a registration update response to the EAS (or the SF) after completing a service registration update in this step. When the registration request is replaced with the deregistration request, the primary EES sends a deregistration response to the EAS (or the SF) after completing service deregistration in this step.

Steps 1606 to 1612: The primary EES sends the updated service chain policy library to the PCF in the UDR manner.

For a specific implementation of this step, refer to related content in the procedure shown in FIG. 12A and FIG. 12B.

Steps 1613 to 1618: The primary EES determines a corresponding target service chain policy based on a service requirement of the AF, and sends information (for example, an identifier of the target service chain policy) about the target service chain policy to the PCF.

For a specific implementation of this step, refer to related content in the procedure shown in FIG. 12A and FIG. 12B.

The procedure shown in FIG. 16A and FIG. 16B is merely an example. Some steps may be optional steps, for example, steps for sending a response message. A time sequence of the steps may alternatively be adjusted based on the service requirement. This is not limited in this embodiment of this application.

In the foregoing procedure shown in FIG. 16A and FIG. 16B, for the scenario in which the services are deployed on the plurality of EESs, it is proposed that the EAS/SF sends the information about the service to the primary EES, and the primary EES maintains the service chain policy library and sends the service chain policy library to the PCF in the UDR manner as an update. In a process of executing the service requirement of the AF, it is proposed that the AF first requests a device primary EES for maintaining the service chain policy to map or convert the service requirement to the information (for example, the identifier of the target service chain policy) about the target service chain policy. This reduces execution logic of performing service chain policy conversion by the PCF based on the service requirement, that is, the PCF does not need to understand a specific service requirement. Based on the foregoing procedure, the device primary EES for maintaining the service chain policy may update the service chain policy library based on the information about the service provided by the EAS/SF. In comparison with the related technology in which information about the service chain policy library is preconfigured or manually configured in an OAM manner to the PCF, this procedure can implement an automatic update of the service chain policy library. For the service requirement of the application function AF, the EES converts the service requirement into the information about the target service chain policy, so that the execution logic of performing service chain policy conversion by the PCF based on the service requirement can be reduced.

FIG. 17A and FIG. 17B show a procedure in which when services are deployed on a plurality of EESs and a primary EES is responsible for maintaining a service chain policy library, the primary EES sends an updated service chain policy library to the PCF in an OAM manner as an update.

In the procedure shown in FIG. 17A and FIG. 17B, for a specific implementation of a dynamic update process (steps 1701 to 1705) of the service chain policy library, refer to related content in the procedure shown in FIG. 16A and FIG. 16B. For a specific implementation of a process of requesting the service chain policy (steps 1710 to 1715), refer to related content in the procedure shown in FIG. 16A and FIG. 16B.

Different from the procedure shown in FIG. 16A and FIG. 16B, in FIG. 17A and FIG. 17B, the primary EES sends the service chain policy library to the PCF in the OAM manner as an update.

The procedure shown in FIG. 17A and FIG. 17B is merely an example. Some steps may be optional steps, for example, steps for sending a response message. A time sequence of the steps may alternatively be adjusted based on the service requirement. This is not limited in this embodiment of this application.

In the foregoing procedure shown in FIG. 17A and FIG. 17B, for the scenario in which the services are deployed on the plurality of EESs, it is proposed that the EAS/SF sends information about a service to the primary EES, and the primary EES maintains the service chain policy library and sends the service chain policy library to the PCF in the OAM manner as an update. In a process of executing the service requirement of the AF, it is proposed that the AF first requests a device primary EES for maintaining the service chain policy to map or convert a service requirement to information (for example, an identifier of a target service chain policy) about the target service chain policy. This reduces execution logic of performing service chain policy conversion by the PCF based on the service requirement, that is, the PCF does not need to understand a specific service requirement. Based on the foregoing procedure, the device primary EES for maintaining the service chain policy may update the service chain policy library based on information about a service provided by the EAS/SF. In comparison with the related technology in which information about the service chain policy library is preconfigured or manually configured in the OAM manner to the PCF, this procedure can implement an automatic update of the service chain policy library. For the service requirement of the application function AF, the EES converts the service requirement into the information about the target service chain policy, so that the execution logic of performing service chain policy conversion by the PCF based on the service requirement can be reduced.

Based on a same technical concept, an embodiment of this application further provides an apparatus. The apparatus may perform the procedure performed by the first network function entity in the foregoing embodiments.

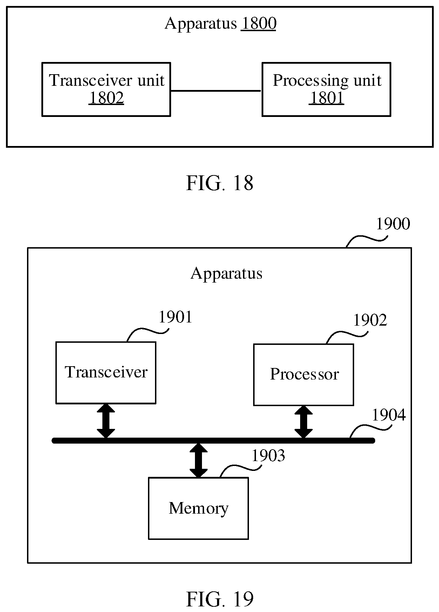

As shown in FIG. 18, the apparatus 1800 may include a processing unit 1801 and a transceiver unit 1802. The transceiver unit 1802 is coupled to the processing unit 1801.

When the apparatus 1800 performs the procedure performed by the first network function entity, the foregoing function modules may include the following functions.

The transceiver unit 1802 is configured to receive information about a service.

The processing unit 1801 is configured to determine, based on the information about the service, that a service related to a service chain policy library changes, and update a service chain policy in the service chain policy library, where service chain policies in the service chain policy library correspond to different ordered sets of a plurality of services.

In a possible implementation, the processing unit 1801 is specifically configured to determine, based on the information about the service, a newly added service related to the service chain policy library, where the information about the service includes information about the newly added service.

Optionally, the transceiver unit 1802 is specifically configured to receive a registration request message, where the registration request message includes the information about the newly added service.

Optionally, after the service chain policy in the service chain policy library is updated, the service chain policy library includes updated service chain policies, the updated service chain policies correspond to different ordered combinations of a plurality of services, and the plurality of services include the newly added service.

In a possible implementation, the processing unit 1801 is specifically configured to determine, based on the information about the service, a to-be-deleted service in services related to the service chain policy library, where the information about the service includes information about the to-be-deleted service.

Optionally, the transceiver unit 1802 is specifically configured to receive a deregistration message, where the deregistration message includes the information about the to-be-deleted service.

Optionally, after the service chain policy in the service chain policy library is updated, the service chain policy library includes updated service chain policies, the updated service chain policies correspond to different ordered combinations of a plurality of services, and the plurality of services do not include the to-be-deleted service.

In a possible implementation, the processing unit 1801 is specifically configured to determine, based on the information about the service, a to-be-updated service in services related to the service chain policy library, where the information about the service includes information about the to-be-updated service.

Optionally, the transceiver unit 1802 is specifically configured to receive a registration update request message, where the registration update request message includes the information about the to-be-updated service.

Optionally, after the service chain policy in the service chain policy library is updated, the service chain policy library includes updated service chain policies, the updated service chain policies correspond to different ordered combinations of a plurality of services, and the plurality of services include the to-be-updated service.

In a possible implementation, the network function entity is a network function entity for receiving service registration. The transceiver unit 1802 is specifically configured to receive the information about the service from an edge application server or a service function entity.

In a possible implementation, the network function entity is a network function entity for data network configuration. The transceiver unit 1802 is specifically configured to receive the information about the service from a network function entity for receiving service registration.

Optionally, the information about the service from the network function entity for receiving service registration is sent, based on information about a service from an edge application server or a service function entity, by the network function entity for receiving service registration.

Optionally, the transceiver unit 1802 is further configured to receive indication information, where the indication information indicates whether the edge application server or the service function entity has a service providing capability. The processing unit 1801 is specifically configured to: determine, based on the indication information, that the edge application server or the service function entity has the service providing capability; and update the service chain policy in the service chain policy library.

In a possible implementation, the network function entity is a network function entity for receiving service registration. The transceiver unit 1802 is specifically configured to receive the information about the service from another network function entity for receiving service registration.

In a possible implementation, after the service chain policy in the service chain policy library is updated, the transceiver unit 1802 is further configured to receive a request message from the edge application server or the service function entity, where the request message includes information related to a service requirement. The processing unit 1801 is further configured to: select a target service chain policy from the service policy library based on the information related to the service requirement; and send information about the target service chain policy to the edge application server or the service function entity.

In a possible implementation, the information about the service includes any one or more of the following: an identifier of the service, indication information of a service provider, indication information of a data network to which the service belongs, and endpoint information of the service.

The apparatus 1800 can implement the method steps in the foregoing method embodiments, and can achieve a same technical effect. A part the same as the method embodiments in this embodiment and beneficial effects are not described in detail herein again.

Based on a same technical concept, FIG. 19 shows another apparatus 1900. The apparatus 1900 may perform the steps performed by the first network function entity in embodiments of this application. The apparatus may have more components, and this is not limited in this application.

The communication apparatus may include one or more processors, configured to execute computer program instructions. When the computer program instructions are executed by the one or more processors, the apparatus performs the methods performed by the related network function entity (for example, the first network function entity) in the foregoing embodiments of this application.

For example, as shown in FIG. 19, the apparatus 1900 may include a transceiver 1901, a memory 1903, and a processor 1902. The transceiver 1901, the memory 1903, and the processor 1902 may be connected via a bus 1904. The transceiver 1901 may be used by the apparatus to perform communication, for example, to send or receive a signal. The memory 1903 is coupled to the processor 1902, and may be configured to store a program and data that are necessary for implementing functions of the apparatus 1900. The memory 1903 and the processor 1902 may be integrated or may be independent of each other.

For example, the transceiver 1901 may be a communication port, for example, a communication port (or referred to as an interface) used for communication between network entities. The transceiver 1901 may also be referred to as a transceiver unit or a communication unit. The processor 1902 may be implemented by using a processing chip or a processing circuit. The transceiver 1901 may receive or send information in a wireless manner or in a wired manner.

In addition, based on an actual use requirement, the apparatus provided in embodiments of this application may include a processor, and the processor invokes an external transceiver and/or memory to implement the foregoing functions, steps, or operations. The apparatus may further include a memory, and the processor invokes and executes a program stored in the memory to implement the foregoing functions, steps, or operations. Alternatively, the apparatus may further include a processor and a transceiver (or a communication interface), and the processor invokes and executes a program stored in an external memory to implement the foregoing functions, steps, or operations. Alternatively, the apparatus may include a processor, a memory, and a transceiver.

Based on a same concept as that of the foregoing method embodiments, an embodiment of this application further provides a communication system. The communication system includes a first network function entity (or referred to as a network function entity) and a second network function entity. The second network function entity is configured to send information about a service to the first network function entity (or the network function entity), and the first network function entity (or the network function entity) is configured to perform the methods implemented by the first network function entity in the methods provided in the foregoing embodiments of this application.

Based on a same concept as that of the foregoing method embodiments, an embodiment of this application further provides a computer-readable storage medium. The computer-readable storage medium stores program instructions (or referred to as a computer program or instructions). When the program instructions are executed by a processor, a computer is enabled to perform the operation performed by the first network function entity in the foregoing method embodiments and any possible implementation of the foregoing method embodiments.

Based on a same concept as that of the foregoing method embodiments, this application further provides a computer program product, including program instructions. When the computer program product is invoked and executed by a computer, the computer is enabled to implement the operation performed by the first network function entity in the foregoing method embodiments and any possible implementation of the foregoing method embodiments.

Based on a same concept as that of the foregoing method embodiments, this application further provides a chip or a chip system. The chip is coupled to a transceiver, and is configured to implement the operation performed by the first network function entity in the foregoing method embodiments and any possible implementation of the foregoing method embodiments. The chip system may include the chip and components such as a memory and a communication interface.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims in this application and their equivalent technologies.

## Claims

1. A service chain policy processing method, wherein the method comprises:
receiving, by a network function entity, information about a service; and
determining, by the network function entity based on the information about the service, that a service related to a service chain policy library changes, and updating a service chain policy in the service chain policy library, wherein service chain policies in the service chain policy library correspond to different ordered combinations of a plurality of services.

2. The method according to claim 1, wherein the determining, by the network function entity based on the information about the service, that a service related to a service chain policy library changes comprises:
determining, by the network function entity based on the information about the service, a newly added service related to the service chain policy library, wherein the information about the service comprises information about the newly added service.

3. The method according to claim 2, wherein the receiving, by a network function entity, information about a service comprises:
receiving, by the network function entity, a registration request message, wherein the registration request message comprises the information about the newly added service.

4. The method according to either of claims 2 and 3, wherein after the updating a service chain policy in the service chain policy library, the service chain policy library comprises updated service chain policies, the updated service chain policies correspond to different ordered combinations of a plurality of services, and the plurality of services comprise the newly added service.

5. The method according to claim 1, wherein the determining, by the network function entity based on the information about the service, that a service related to a service chain policy library changes comprises:
determining, by the network function entity based on the information about the service, a to-be-deleted service in services related to the service chain policy library, wherein the information about the service comprises information about the to-be-deleted service.

6. The method according to claim 5, wherein the receiving, by a network function entity, information about a service comprises:
receiving, by the network function entity, a deregistration message, wherein the deregistration message comprises the information about the to-be-deleted service.

7. The method according to either of claims 5 and 6, wherein after the updating a service chain policy in the service chain policy library, the service chain policy library comprises updated service chain policies, the updated service chain policies correspond to different ordered combinations of a plurality of services, and the plurality of services do not comprise the to-be-deleted service.

8. The method according to claim 1, wherein the determining, by the network function entity based on the information about the service, that a service related to a service chain policy library changes comprises:
determining, by the network function entity based on the information about the service, a to-be-updated service in services related to the service chain policy library, wherein the information about the service comprises information about the to-be-updated service.

9. The method according to claim 8, wherein the receiving, by a network function entity, information about a service comprises:
receiving, by the network function entity, a registration update request message, wherein the registration update request message comprises the information about the to-be-updated service.

10. The method according to either of claims 8 and 9, wherein after the updating a service chain policy in the service chain policy library, the service chain policy library comprises updated service chain policies, the updated service chain policies correspond to different ordered combinations of a plurality of services, and the plurality of services comprise the to-be-updated service.

11. The method according to any one of claims 1 to 10, wherein the network function entity is a network function entity for receiving service registration, and the receiving, by a network function entity, information about a service comprises:
receiving, by the network function entity, the information about the service from an edge application server or a service function entity.

12. The method according to any one of claims 1 to 10, wherein the network function entity is a network function entity for data network configuration, and the receiving, by a network function entity, information about a service comprises:
receiving, by the network function entity, the information about the service from a network function entity for receiving service registration.

13. The method according to claim 12, wherein the information about the service from the network function entity for receiving service registration is sent, based on information about a service from an edge application server or a service function entity, by the network function entity for receiving service registration.

14. The method according to claim 11 or 13, wherein the method further comprises:
receiving, by the network function entity, indication information, wherein the indication information indicates whether the edge application server or the service function entity has a service providing capability; and
the updating a service chain policy in the service chain policy library comprises:
determining, based on the indication information, that the edge application server or the service function entity has the service providing capability, and updating, by the network function entity, the service chain policy in the service chain policy library.

15. The method according to any one of claims 1 to 10, wherein the network function entity is a network function entity for receiving service registration, and the receiving, by a network function entity, information about a service comprises:
receiving, by the network function entity, the information about the service from another network function entity for receiving service registration.

16. The method according to any one of claims 1 to 15, wherein after the updating, by the network function entity, a service chain policy in the service chain policy library, the method further comprises:
receiving, by the network function entity, a request message from an edge application server or a service function entity, wherein the request message comprises information related to a service requirement;
selecting, by the network function entity, a target service chain policy from the service policy library based on the information related to the service requirement; and
sending, by the network function entity, information about the target service chain policy to the edge application server or the service function entity.

17. The method according to any one of claims 1 to 16, wherein the information about the service comprises any one or more of the following:
an identifier of the service;
indication information of a service provider;
indication information of a data network to which the service belongs; and
endpoint information of the service.

18. A service chain policy processing method, comprising:
sending, by a second network function entity, information about a service to a network function entity;
receiving, by the network function entity, the information about the service; and
determining, by the network function entity based on the information about the service, that a service related to a service chain policy library changes, and updating a service chain policy in the service chain policy library, wherein service chain policies in the service chain policy library correspond to different ordered combinations of a plurality of services.

19. An apparatus, wherein the apparatus comprises a processing unit and a transceiver unit;
the transceiver unit is configured to receive information about a service; and
the processing unit is configured to determine, based on the information about the service, that a service related to a service chain policy library changes, and update a service chain policy in the service chain policy library, wherein service chain policies in the service chain policy library correspond to different ordered sets of a plurality of services.

20. An apparatus, comprising one or more processors, configured to execute computer program instructions, wherein when the computer program instructions are executed by the one or more processors, the apparatus is enabled to perform the method according to any one of claims 1 to 17.

21. A communication system, comprising a network function entity and a second network function entity, wherein
the second network function entity is configured to send information about a service to the network function entity; and
the network function entity is configured to perform the method according to any one of claims 1 to 17.

22. A computer-readable storage medium, wherein the computer-readable storage medium comprises a computer program, and when the computer program is run on a computing device, the computing device is enabled to perform the method according to any one of claims 1 to 17.

23. A chip, wherein the chip is coupled to a memory, and is configured to read and execute program instructions stored in the memory, to implement the method according to any one of claims 1 to 17.

24. A computer program product, wherein when the computer program product is invoked by a computer, the computer is enabled to perform the method according to any one of claims 1 to 17.
